# EUROPEAN PATENT APPLICATION

(11) **EP 1 588 627 A1**
(43) Date of publication of application: **26.10.2005**
(21) Application number: 03789626.3
(22) Date of filing: 24.12.2003
(51) Int. Cl.: A23L 1/015, A23L 1/22

(54) **METHOD OF REDUCING UNPLEASANT TASTE AND/OR UNPLEASANT ODOR**

(30) Priority: 27.12.2002 JP 2002378938; 06.11.2003 JP 2003376600
(71) Applicant: KABUSHIKI KAISHA HAYASHIBARA SEIBUTSU KAGAKU KENKYUJO, Okayama-shi Okayama 700-0907 (JP)
(72) Inventor: UCHIDA, Yukio K. K. Hayashibara, Okayama-shi, Okayama 700-0907 (JP); TAKEUCHI, Kanou K. K. Hayashibara, Okayama-shi, Okayama 700-0907 (JP); KUBOTA, Michio K. K. Hayashibara, Okayama-shi,Okayama 700-0907 (JP); MIYAKE, Toshio K. K. Hayashibara, Okayama-shi,Okayama 700-0907 (JP)
(74) Representative: Daniels, Jeffrey Nicholas
(86) International application number: PCT/JP2003/016613
(87) International publication number: WO 2004/060077

(57) **Abstract**

The present invention has objects to provide a method of lowering the unpleasant taste and/or smell of compositions, and an agent for lowering unpleasant taste and/or smell. The objects are solved by providing a method of lowering unpleasant taste and/or smell, comprising a step of incorporating an saccharide derivative of α,α-trehalose in compositions; a composition with lowered unpleasant taste and/or smell, obtainable by the method; and an agent for lowering unpleasant taste and/or smell, comprising an saccharide derivatives of α,α-trehalose as an effective ingredients.

## Description

### TECHNICAL FIELD

The present invention relates to a method for lowering unpleasant taste and/or smell using a saccharide derivative of α,α-trehalose, a composition lowered with unpleasant taste and/or smell which is obtainable by the method, and an agent for lowering unpleasant taste and/or smell, which comprises a saccharide derivative of α,α-trehalose as an effective ingredient.

### BACKGROUND ART

In general, compositions such as foods, beverages, cosmetics, quasi-drugs, pharmaceuticals and chemical industrial products, have their own taste and smell inherent to their materials or generated during their processes and preservations. Among which, some of such some makes some person feel unpleasant taste and/or smell. These unpleasant taste and/or smell are considered as one of the remarkable factors for evaluating the preference of compositions. Therefore, lowering such unpleasant taste and/or smell has been recognized as one of the most important aims in this art.

To solve the aim, a method for improving unpleasant taste and/or smell in tea beverages using α,α-trehalose, disclosed in Japanese Patent No. 3, 304, 498, and an unpleasant rusty taste caused by bivalent iron ion in a quaffable internal medicine using α,α-trehalose and dextrin, disclosed in Japanese Patent Publication (Kokai) No.316,246/2001, are previously proposed. The present applicant disclosed a method for lowering bitter taste of amino acid using α,α-trehalose in the specification of Japanese Patent Application No. 85,546/2002. In addition, the present applicant also discloses in Japanese Patent Publication (Kokai) Nos. 143, 876/1995, 73,504/1996 and 228,980/2000, and Japanese Patent No. 3,182,679 that α,α-trehalose or saccharide derivatives thereof are useful as a quality-improving agent, taste-improving agent or corrigent for foods or beverages. However, the above patent publications never concretely disclose the effect of saccharide derivatives of α,α-trehalose which can lower unpleasant taste and/or smell of compositions and the effective amount thereof.

### DISCLOSURE OF THE INVENTION

The present invention has the first object to provide a method for lowering unpleasant taste and/or smell inherent to a raw material in a composition and those newly generated during its processing, sterilizing and preserving steps in order to improve the preference of the composition when taken orally or in other administrate routs. The present invention has the second object to provide a composition with lowered unpleasant taste and/or smell, obtainable by the method. The present invention has the third object to provide an agent for lowering unpleasant taste and/or smell of a composition having unpleasant taste and/or smell.

The present inventors have eagerly studied to attain the above objects. As a result, they revealed that saccharide derivatives of α,α-trehalose lower unpleasant taste and/or smell of objective compositions by incorporating the saccharide derivatives therein in such a manner of lowering unpleasant taste and/or smell newly generated during the processes or preservations of the compositions, and masking unpleasant taste and/or smell inherent to compositions. They continuously studied based on the finding and accomplished the present invention. The present invention provides a method for lowering unpleasant taste and/or smell of objective compositions when orally taken, and for improving the preference of the compositions by incorporating saccharide derivatives of α,α-trehalose in the compositions by incorporating saccharide derivatives of α,α-trehalose in the compositions.

### BEST MODE FOR CARRYING OUT THE INVENTION

The term "compositions having unpleasant taste and/or smell" as referred to as in the present invention includes any of compositions having unpleasant taste and/or smell. Such compositions can be usually chosen from articles for oral use, foods, beverages, cosmetics, quasi-drugs, pharmaceuticals, commodities, feeding stuffs, pet foods, groceries, and chemical industrial products. Further, they can be optionally chosen from those which exhale odor illustrated with domestic or industrial waste such as excreta, waste water, sludge, garbage, human beings, animals, furniture, garniture, machines and tools.

The term "articles for oral use" as referred to as in the present invention includes those which are orally taken by human beings and/or animals. They are usually chosen from foods, beverages, cosmetics, quasi-drugs, pharmaceuticals, feeding stuffs and pet foods, further, articles being spat out without deglutition, such as chewing gums, refreshments, mouse washes and tooth pastes.

The term "unpleasant taste and/or smell inherent to raw materials used for process of composition" as referred to as in the present invention includes vegetable smell inherent to vegetables such as a root crop, pimento, carrot, leek, green onion, onion and garlic; vegetable juice such as *"aojiru"* (green vegetable juice); soymilk; pine leaf extract; or bamboo extract; fishy or fleshy smell from fishery products including fish egg and sea urchin; meats including liver; bloody ingredients; volatile or nonvolatile aldehydes and amino compounds; or hydrogen sulfide; smell of hydrogen sulfide due to decomposition of sulfur-containing amino acids or protein composed of them, smell of lower aldehydes or butandions from heated cacao beans including processed ones, metallic, bitter or astringent taste of bivalent iron ion, trivalent iron ion, magnesium, calcium, alum, bittern, bitter taste of amino acid such as tyrosine and tryptophan; unpleasant taste and/or smell of peptides composed of such amino acids; extracts such as chlorella extract, snapping turtle extract, propolis extract and herb extract; vitamin such as vitamin B₁ or B₂; royal jelly; honey; medical herb; crude drug; antibiotic; synthetic medicine; unsaturated fatty acid such as DHA and EPA; emulsifier such as glycerin fatty acid ester and sucrose fatty acid ester. In addition, aftertaste (it means a continuous sweet taste after oral intake) and irritating taste inherent to sweeteners such as sucralose, stevioside, L-aspartyl-L-phenylalaninemethylester, acesulfame-K, sucrose, and fructose are included in such unpleasant taste. The unpleasant taste and/or smell, newly generated during the process, transfer or preservation, is usually from retort pouched foods such as boiled rice, beef bowl and noodle; fermentative food and beverage such as low-malted beer, beer, cheese, yoghourt, frozen yoghourt, "*natto*" soybeans fermented in their own bacteria, soy source, vinegar, bread and Japanese sweet rice vine; processed fresh vegetable. In addition, unpleasant taste and/or smell newly generated during preserving beverage in transparent or semi-transparent bottle such as PET bottle under the sun light for a long time, and generated from can of canned food, PET bottle, paper cup, paper filter for making coffee are also applicable. Further, unpleasant smell of urine, feces, resolvent thereof or putrefaction thereof from baby, pet animal or domestic animal, aged body odor, unpleasant odor of chemical industrial products including agrochemicals, and foreign smell from furniture, household good, machine or tool are also applicable. The word "unpleasant taste and/or smell" is usually expressed using the following illustrated words; "harsh taste", "astringent taste", "bitter taste", "musty smell", "animal smell", "stuffy smell", "retort pouch's smell", "cooked odor", "ammoniac smell", "vegetable smell" , "fishy smell" , "*Hine*-*Shu*" (a smell of long-term stored liquor), "metallic taste", "rusty taste", "smell of chlorine", "smell of old rice", "fermenting smell", "smell of low-malted beer", "light produced flavor", "chemical smell", "irritating odor", "foreign taste" , "foreign smell" , "bad taste" or "bad smell".

The word "saccharide derivatives of α,α-trehalose" as referred to as in the present invention includes any one or two more non-reducing oligosaccharides having α,α-trehalose structure and composed by three or more glucose residues. Concretely, they the saccharide derivatives of α,α-trehalose have the forms in a manner of binding either of mono-glucose residue, di-glucose residue, tri-glucose residue or tetra-glucose residue to both or either end of the α,α-trehalose molecule. Further, that is to say, the saccharide derivatives of α,α-trehalose, preferably used in the present invention, have three to six glucose residues and are disclosed by the same applicant as in Japanese Patent Publication (Kokai) Nos. 143,876/95, 73,504/96 and 228,980/2000, and Japanese Patent No. 3,182,679 are preferably used. Such saccharide derivatives are illustrated with mono-glucosyl α,α-trehalose such as α-maltosyl α-glucoside and α-isomaltosyl α-glucoside; di-glucosyl α,α-trehalose such as α-maltotriosyl α-glucoside (alias α-maltosyl α,α-trehalose), α-maltosyl α-maltoside, α-isomaltosyl α-maltoside and α-isomaltosyl α-isomaltoside; tri-glucosyl α,α-trehalose such as α-maltotetraosyl α-glucoside (alias α-maltotriosyl α,α-trehalose), α-maltosyl α-maltotrioside, α-panosyl α-maltoside; and, tetra-glucosyl α,α-trehalose such as α-maltopentaosyl α-glucoside (alias α-maltotetraosyl α,α-trehalose), α-maltotriosyl α-maltotrioside and α-panosyl α-maltotrioside.

Such saccharide derivatives of α,α-trehalose can be produced by fermenting method, enzymatic method or organic synthetic method, and are never restricted to specific origin or process. For example, the saccharide derivatives can be directly prepared from starch materials or hydrolyzate thereof by enzymatic method disclosed by the same applicant in Japanese Patent Publication (Kokai) Nos. 143,876/1995, 73,504/1996 and 228,980/2000, and Japanese Patent No. 3182679. In addition, they can be prepared by reacting starch hydrolyzates rich in specific oligosaccharides such as maltotetraose, maltopentaose, maltohexaose and maltoheptaose obtainable with a maltotetraose producing enzyme disclosed in Japanese Patent Publication (Kokai) No. 143,876/1995, an α-amylase capable of efficiently producing maltopentaose disclosed in Japanese Patent Publication (Kokai) No. 14,962/1995 and a maltohexaose maltoheptaose producing amylase disclosed in Japanese Patent Publication (Kokai) No. 236,478/1995 with non-reducing saccharide producing enzyme disclosed in Japanese Patent Publication (Kokai) No. 143,876/1995. Further, they can be prepared by reacting a solution containing starch or hydrolysate thereof and α,α-trehalose with an enzyme capable of transferring glycosyl group such as cyclodextrin glucanotransferase. The resulting reaction mixture obtainable by the above method can be used as a saccharide solution containing saccharide derivatives of α,α-trehalose. Optionally, they can be partially or highly purified. Such preparation processes, using easily and cheaply available starch materials, are advantageously used in view of industrial production because of their sufficient production yield at a low cost.

A saccharide having trehalose structure as an end unit more effectively lowers unpleasant taste and/or smell among the saccharide derivatives of α,α-trehalose described above. Particularly, saccharide mixtures containing α-maltotriosyl α-glucoside (alias α-maltosyl α,α-trehalose) as a main ingredient and one or more saccharides selected from the group consisting of α-maltosyl α-glucoside (alias α-glucosyl α,α-trehalose), α-maltotetraosyl α-glucoside (alias α-maltotriosyl α,α-trehalose) and α-glycosyl α-glucoside (alias α-glycosyl α,α-trehalose) are more preferably used. The amount of α-maltosyl α,α-trehalose in each of the saccharide mixtures is 5% by weight or more (hereinafter, "% by weight" is simply represented by "%"), preferably 10% or more, more preferably 20% or more.

Among the above saccharides, α-maltosyl α-glucoside and α-maltotetraosyl α-glucoside in a crystalline form are disclosed in Japanese Patent No.3,182,679 and Japanese Patent Publication (Kokai) No. 228,980/2000. To exert the desired effect in this invention, such crystalline saccharides can be preferably used after changed into a non-crystalline state such as syrupy state and glass state. The agent of the present invention is sufficient to contain only saccharide derivatives of α,α-trehalose as an effective ingredient as long as it exerts the desired effect. It can also be prepared as a saccharide mixture containing the saccharide derivatives of α,α-trehalose and other saccharides produced from starch materials in the process of the saccharide derivatives of α,α-trehalose, such as glucose, isomaltose, maltose, oligosaccharide and dextrin, as long as it effectively lowers unpleasant taste and/or smell of compositions. Such saccharides can be converted into sugar alcohols by hydrogenation.

The saccharide derivatives of α,α-trehalose comprised, as effective ingredients, in the lowering agent hardly induce browning or generating foreign taste and foreign smell, and hardly spoil other ingredients because they are stable due to their reducing power lower than that of reducing partial hydrolyzates. Particularly, even if they are mixed and processed with amino compounds such as amino acids, oligopeptites, polypeptides and proteins, they neither induce nor cause the above disadvantages. They have not only lower reducing power but also lower viscosity differing from reducing partial starch hydrolyzates. In addition, They have a high quality and elegant sweetness without starchy smell like dextrin. Therefore, they are used as an agent of lowering unpleasant taste and/or smell of various compositions. If necessary, for the purpose of improving dispersion or filling, they can be used with one or more members selected from the group of consisting of other reducing saccharides, non-reducing saccharides, sugar alcohols, high intensity sweeteners, aqueous polysaccharides, inorganic salts, emulsifiers, anti-oxidants, and agents for chelation. Further if necessary, they can be used with one or more members selected from the group consisting of colorants, perfumeries, preservatives, acidifiers, agents for "*umami*", sweeteners, stabilizers, fillers and alcohols.

Other ingredients usable in the present invention are listed in the below; reducing saccharides such as glucose, maltose, palatinose and isomerized saccharide; non-reducing saccharides such as sucrose, α,α-trehalose, neotrehalose, isotrehalose, cyclic tetrasaccharide disclosed in International Patent Publication Nos. WO02/24,832, WO02/10,361 and WO02/72,594 or its saccharide derivatives; other saccharides such as powdered starch hydrolysate, honey, maple sugar, glycosyl sucrose-containing syrup, isomaltooligosaccharide, glactooligosaccharide, fractooligosaccharide and lactosucrose; sugar alcohols such as erythritol, xylitol, sorbitol, maltitol, lactitol and panitol; high intensity sweeteners such as dihydrochalcone, stevioside, α-glycosyl stevioside, revaudioside, glycyrrhizin, L-aspartyl-L-phenylalanine methylester, acesulfame-K, sucralose and saccharine; other sweeteners such as glycine and alanine; non-organic salts such as phosphoric acid, polyphosphoric acid and salts thereof; fillers such as dextrin, starch and lactose; organic acids such as lactic acid, sodium lactate, citric acid, sodium citrate and salts thereof; alcohols such as ethanol; gums such as pullulan, levan, sodium alginate, agar, gelatin, casein, gum Arabic and guar gum; and aqueous polymers such as pectin, methyl cellulose, carboxyl methyl cellulose, polyvinyl alcohol, polyvinyl pyrrolidone and polydextrose. These ingredients can be used in an appropriate combination. Particularly, α,α-trehalose having strong effect on lowering unpleasant taste and/or smell is advantageously used.

The agent of the present invention contains a saccharide derivative (s) of α,α-trehalose in an amount of about 10% or more, preferably about 20% or more, more preferably 30% or more to total weight of the agent on a dry solid basis.

The amount of the saccharide derivatives of α,α-trehalose in the agent is not specifically restricted as long as the agent lowers unpleasant taste and/or smell of compositions. Usually, the saccharide derivatives of α,α-trehalose are incorporated in the agent in an amount of about 0.6% or more, preferably about 0.9% or more, more preferably about 1.2% or more to total weight of the agent on a dry solid basis. Usually, an amount less than 0.6% is not sufficient to lower unpleasant taste and/or smell of compositions. The upper limit of the amount of saccharide derivatives of α,α-trehalose is not specifically restricted as long as the agent does not affect the quality, function or objective use of products.

The agent of the present invention can be in any forms of a syrup, masquitte, paste, powder, granule or tablet. If necessary, it can be admixed with fillers, excipients or binders to form into a desired form such as a granule, sphericity, stick, plate, cube or tablet.

The agent of the present invention exerts the desired effects, when incorporated into objective compositions at a preferable processing step from processing of raw materials until obtaining the final products, considering the ingredients or the objective use of the compositions. The agent can be incorporated by the methods such as mixing, kneading, resolving, melting, dispersing, suspending, emulsifying, forming inverse micelle, penetrating, crystallizing, scattering, applying, adhering, spraying, coating, injecting, immersing, solidifying and holding. Cooking or treating foods and beverages, using compositions, containing the agent of the present invention, such as soup stock, broth and seasoning, can be included in the above methods. In addition, packing or wiping compositions containing unpleasant taste and/or smell with paper towels orwet tissue papers containing the agent can be used to perform the intended effects.

The agent of the present invention lowers unpleasant taste and/or smell represented by foreign taste , foreign smell , unpleasant taste, unpleasant smell, bad taste or bad smell; concretely, harsh taste, astringent taste, bitter taste, musty smell, chemical smell, animal smell, stuffy smell, retort pouch's smell, cooked odor, ammoniac smell, vegetable smell, fishy smell, *"Hine-Shu"* (an smell of long-term stored liquor), smell of chloride, smell of amines, smell of aldehydes, smell of hydrogen sulfide, smell of old rice, fermenting smell, smell of low-malted beer, chemical smell, smell generated during the preservation of beverages in transparent or semi-transparent bottles such as PET bottles under the sun light for a long period, smell of can, PET bottle, paper cup, paper filter for coffee, wet towel or wet tissue, of retort pouched foods of boiled rice, instant beef bowl, or noodle; vegetable juice of root crops, vegetable, or *"aojiru"* (green vegetable juice); foods and beverages containing minerals such as bivalent iron ion, trivalent iron ion, magnesium ion, calcium ion, alum and bittern; amino acids such as tyrosine and tryptophan; peptide composed with such amino acids; vitamins such as vitamin B₁ or B₂; medical herb; crude drug; pharmaceuticals; garlic; unsaturated fatty acids such as DHA and EPA; meat; fish egg; fish and shellfish; fermented food and beverage such as low malted beer, rice wine, beer, liqueur, distilled spirit, wine, cheese, yoghourt, "*natto*" (fermentedsoybean), soysauce, bread, Japanese sweet wine and cooking alcohol; sprout vegetable such as bean sprout, broccoli sprout and alfalfa; processed vegetable; soup stock for grilled meat or eel; seasoning for pickled vegetable; food and beverage containing amino acids and/or vitamins; or processed foods thereof. Further, it improves aftertaste or stimulative taste of sweeteners such as sucralose, stevioside, L-aspartyl-L-phenylalaninemethylester, potassium acesulfame, dihydrochalcone, glycine, alanine, sucrose, fructose and isomerized sugar, and lowers unpleasant taste and/or smell of emulsifiers contained in foods, beverages or cosmetics. Therefore, it can be advantageously used in foods, beverages, cosmetics, quasi-drugs or pharmaceuticals containing the above substances. In addition, the agent can be used in water absorbing polymers or sand used in sanitary goods, paper diaper or toilet for pet animals because of enabling to support the water-holding capacity of the polymers or the sand and lower foreign smell of amines, aldehydes, ammonia or sulfide compounds such as hydrogen sulfide from urine, excrement, decomposition or putridity thereof. Furthermore, the agent can be used as an agent for lowering unpleasant smell in the purpose of lowering foreign smell of feeds, pet foods, agrochemicals, other drugs, commodities, groceries or chemical industrial products.

The agent can be used as an agent for preserving or improving the quality of feeds or pet foods for bleeding domestic animals, domestic fowls, pets, honeybees, silkworms, fishes, shellfishes, conchostracans such as shrimp and crab, echinoderms such as sea urchin and sea cucumber, larva or imago of insects. The agent is useful for lowering unpleasant taste and/or smell of various product in the form of a solid, paste or liquid, luxury grocery items, cosmetics, quasi-drugs or pharmaceuticals such as tobacco, toothpaste, lipstick, lip cream, tablet, troche, liver oil drop, oral refreshment, oral perfumery and gargle as well as for retaining their quality and improving their quality. In addition, since the agent has a strong effect on moisture retainability, it can be substituted for glycerol. Therefore, it can be used for foods, cosmetics, quasi-drugs, commodities, feeds, pet foods, groceries or chemical industrial products.

The agent is advantageously applied for easily inactivated substances such as physiologically active substances, or health foods, cosmetics, quasi-drugs, pharmaceuticals or feeds. Such physiologically active substances are illustrated with lymphokines such as interferon-α, interferon-β, interferon-γ, tumor necrosis factor-α, tumor necrosis factor-β, macrophage migration inhibitory factor, colony stimulation factor, transfer factor and interleukin-2; hormones such as insulin, growth hormones, prolactin, erythropoietin and follicle-stimulating hormone; biological preparations such as BCG vaccine, Japanese encephalitis vaccine, measles vaccine, polio vaccine, lymph, tetanus toxoid, *Antivenenum Trimeresurus Flavoviridis* and human immunoglobulin; antibiotics such as penicillin, erythromycin, chloramphenical, tetracycline, streptomycin and kanamycin sulfate; vitamins such as thiamine, riboflavin, L-ascorbic acid, liver oil, carotenoid, ergosterol and tocopherol; enzymes such as lipase, elastase, urokinase, protease, β-amylase, isoamylase, glucanase and lactase; extracts such as galenical extracts including Korean ginseng, extract of snapping turtle, extract of chlorella, extract of aloe, propolis extract and extract of fungus such as agarisk, litchi and *"meshimakobu"* (*Phelinus Linteus*); viable organism such as virus, acidophilus and yeast; physically active substances such as royal jelly; or composition containing thereof. The agent effectively lowers unpleasant taste and/or smell of the above substances or compositions when incorporated therein. In addition, since the agent prevents the decomposition or denaturation, it facilitates to produce stable products such as health foods, cosmetics, quasi-drugs or pharmaceuticals in the form of a liquid, paste, syrup or solid even after a relatively long term preservation.

The agent in a powder form is useful as a powdering base for producing a powdered compound with high quality in a such manner of mixing the agent with solutions of foods, pharmaceuticals, cosmetics, materials thereof, or intermediate products thereof such as *"aojiru"* (green vegetable juice), vegetable juice, fruit juice, extract of tea, extracts, condensed soy sauces, seasonings, oils, fats, amino acids, minerals and vitamins, and drying (ex. spray-drying, freeze-drying and heat-drying). The powdered compositions can be advantageously processed to form a granule, tablet, paste or masquitte. The saccharide derivatives of α,α-trehalose as an effective ingredient, having the effect on lowering unpleasant taste and/or smell, not only lower unpleasant taste and/or smell inherent to compositions but also newly generated unpleasant taste and/or smell during the step of drying or preservation. Therefore, the resulting compositions will substantially keep the same flavor as of just after drying even after preserved for a relatively long term.

The saccharide derivatives of α,α-trehalose are usually incorporated in an amount of 0.6% or more, preferably 0.9% or more, more preferably 1.2% or more to the weight of a final product, produced from the above powdered compositions as a raw material or an intermediate, on a dry solid basis. The agent can be incorporated at any timing from the preparation of the powdered compositions to the completion of the final product. Further, such powdered compositions are advantageously used for lowering unpleasant taste and/or smell of final products illustrated with soft drinks such as *"aojiru"* (green vegetable juice), vegetable juice, tea beverage and sport beverage; seasoning such as seasoning soy sauce for deep-fried food, seasoning soy sauce for noodle and soup stock of bonito; drink preparations; health supplement. Such final products are lowered in characteristic unpleasant taste and/or smell inherent to or newly generated during preservation of the products.

The saccharide derivatives of α,α-trehalose as an effective ingredient in the agent further enables to prevent the deterioration of compositions due to denaturation of proteins, aging of starch, or oxidation or decomposition of lipid. They have a relatively low sweetness, relatively strong acid-resistance and relatively strong heat-resistance, and harmonize with various substances having other tastes such as sour taste, salty taste, astringent taste, "*umami*" taste and bitter taste. Therefore, the agent can be advantageously used as a quality-retaining agent. The amount of saccharide derivatives of α,α-trehalose in such foods and beverages is not specifically restricted. If other saccharides such as sucrose, starch syrup and sugar alcohols are used to produce foods and beverages, they can be replaced with the saccharide derivatives of α,α-trehalose in an amount of 2.5% or more, preferably 5 to 50% to a final composition. In the case of foods and beverages without saccharide, the agent can be incorporated therein in an appropriate amount not to deteriorate their preference but improve their taste.

The following experiments explain the methods for lowering unpleasant taste and/or smell according to the present invention in detail.

### Experiment 1:

### Effect of various saccharides on inhibiting taste and/or smell of bivalent iron ion

### Experiment 1-1:

### Preparation of test aqueous solutions

To confirm the effect of various saccharides on inhibiting taste and/or smell of bivalent iron ion, the following experiment was carried out. An aqueous solution containing bivalent iron ion was prepared by dissolving 0.05556 part by weight of ammonium ferric citrate (iron content of about 18%), and 0.1 part by weight of ascorbic acid in 100 parts by weight of deionized water. Test aqueous solutions containing 5 mg of bivalent iron per 100 ml of water and 0.5, 1.0, 1.5, 2.0 or 5.0% of saccharide selected from sucrose, maltose (hydrous crystalline maltose commercialized by Hayashibara Biochemical Laboratories, Inc., Okayama, Japan, purify 99.0% or more), α,α-trehalose (hydrous crystalline α,α-trehalose commercialized by Hayashibara Biochemical Laboratories, Inc., Okayama, Japan, purity 99.0% or more), α-glucosyl α,α-trehalose (hydrous crystalline α-glucosyl α,α-trehalose prepared in Experiment B-1 of Japanese Patent Publication (Kokai) No. 291,986/1995, purity 99.0% or more), and α-glucosyl α,α-trehalose (powdery α-maltosyl α,α-trehalose prepared in Example 5 described following, purity 98.1%) were prepared by admixing the above aqueous solution containing bivalent iron with an equal volume of a pre-prepared aqueous solution containing any one of the above saccharides at a concentration of 1.0, 2.0, 3.0, 4.0 or 10.0%, on a dry solid basis. As a control, an aqueous solution was prepared by admixing the aqueous solution containing bivalent iron ion with an equal volume of warter instead of the aqueous saccharide solution.

### Experiment 1-2:

### Judgement of effect on lowering unpleasant taste and/or smell of iron ion

The effect on lowering iron taste and/or smell, namely unpleasant taste and/or smell of iron ion existing in a test aqueous solution at a concentration of 5 mg per 100 ml was judged by a panel test using 12 panels. The criteria of judgement is as follows: "Not effective (symbol "-")" meaning of that the test aqueous solution showed no difference in iron taste and/or smell from that the control aqueous solution, "Slightly effective (symbol "+")", the test aqueous solution showes weaker iron taste and/or smell than the control aqueous solution but the deference was not significant, "Effective (symbol "++")", the test aqueous solution showed a slight iron taste and/or smell but it was significantly weaker than that of the control aqueous solution, and "Strongly effective (symbol "+++")", the test aqueous solution showed almost no iron taste and/or smell. The results are in Table 1. In the judgement for each test aqueous solution, ten or more of 12 panels answered the same judgement.

**Table 1**

| Saccharide | Concentration of saccharide (%) | | | | |
|---|---|---|---|---|---|
| | 0.5 | 1.0 | 1.5 | 2.0 | 5.0 |
| Sucrose | - | - | - | - | - |
| Maltose | - | - | - | + | + |
| α,α-Trehalose | - | - | + | + | ++ |
| α-Glucosyl α,α-trehalose | - | + | ++ | ++ | +++ |
| α-Maltosyl α,α-trehalose | - | + | ++ | ++ | +++ |

As evident from the result in Table 1, sucrose was not effective on lowering unpleasant taste and/or smell of aqueous iron ion solution; maltose was effective on lowering unpleasant taste and/or smell of aqueous iron ion solution at a concentration of 2% or more to the total weight of the aqueous solution on a dry solid basis; α,α-trehalose was effective on lowering unpleasant taste and/or smell of aqueous iron ion solution at a concentration of 1.5% or more to total weight of the aqueous solution on a dry solid basis; and α-glucosyl α,α-trehalose or α-maltosyl α,α-trehalose was effective on lowering unpleasant taste and/or smell of aqueous iron ion solution at a concentration of 1% or more to the total weight of the aqueous solution on a dry solid basis. These results revealed that α-glucosyl α,α-trehalose or α-maltosyl α,α-trehalose has a stronger effect on lowering unpleasant taste and/or smell than α,α-trehalose previously known to have an effect on lowering iron taste and/or smell.

### Experiment 2:

### Effective concentration of saccharide derivatives of α,α-trehalose to lower harsh taste of sodium benzoate

### Experiment 2-1:

### Preparation of test aqueous solutions

To confirm the effective concentration of saccharide to lower harsh taste of sodium benzoate, the following experiment was carried out. Twenty-two parts by weight of a black tea extract, 0.02 part by weight of ascorbic acid, 0.2 part by weight of lemon juice (100%), 0.05 part by weight of sodium benzoate, and either of 0.5, 1.0, 1.5, 2.0 or 5.0 parts by weight of the powdery agent, prepared in the following Example 2, which contains 58.1% of saccharide derivatives of α,α-trehalose (4.1% of α-glucosyl α,α-trehalose, 52.5% of α-maltosyl α,α-trehalose, 1.1% of α-maltosyl α,α-trehalose and 0.4% of α-glysocyl α,α-trehalose), were admixed together and dissolved in water to give 100 parts by weight of a black tea beverage. As a control, an aqueous solution without the agent was prepared.

### Experiment 2-2:

### Judgement of effect on lowering harsh taste of benzoate

The effect on lowering harsh taste, namely unpleasant taste and/or smell, of benzoate existing in the test aqueous solution was judged by a panel test using 12 panels. The criteria of judgement is as follows : "No effect (symbol "-")" meaning of that the test aqueous solution showed no difference in harsh taste from the control solution, "Slightly effective (symbol "+")", the test aqueous solution showed weaker harsh taste than the control aqueous solution but the deference was not significant, "Effective (symbol "++")", the test aqueous solution showed a slightly harsh taste but significantlyweaker than that of the control aqueous solution, and "strongly effective (symbol "+++")", the test aqueous solution showed almost no harsh taste. The results are in Table 2. In Table 2, the upper column shows the concentration of the total saccharide contained in the agent to total weight of the test aqueous solution on a dry solid basis, and the middle column shows the concentration of saccharide derivatives of α,α-trehalose to the total weight of the test aqueous solution on a dry solid basis. In the judgement for each test aqueous solution, ten or more of 12 panels answered the same judgement.

**Table 2**

| | | | | | | |
|---|---|---|---|---|---|---|
| Concentration of the agent for lowering unpleasant taste and/or smell (dry solid basis,%) | 0 | 0.5 | 1.0 | 1.5 | 2.0 | 5.0 |
| Concentration of α,α-trehalose saccharide derivatives (dry solid basis,%) | 0 | 0.3 | 0.6 | 0.9 | 1.2 | 0.3 |
| Effect on lowering harsh taste | - | - | - | + | ++ | +++ |

As evident of the result in Table 2, it was revealed that the agent for lowering unpleasant taste and/or smell containing saccharide derivatives of α,α-trehalose as an effective ingredient was effective on lowering harsh taste of benzoate at a concentration of 1.5% (corresponding to 0.9% of saccharide derivatives of α,α-trehalose) or more, more effective at a concentration of 2% (corresponding to 1.2% of saccharide derivatives of α,α-trehalose), and enables to perfectly eliminate at a concentration of 5% (corresponding to 3% of saccharide derivatives of α,α-trehalose).

### Experiment 3:

### Effect of saccharide derivatives of α,α-trehalose on lowering unpleasant taste and/or smell of amino acids, "aojiru" (green vegetable juice) or soymilk

To confirm the effect of saccharide derivatives on lowering unpleasant taste and/or smell of amino acids, *"aojiru"* (green vegetable juice) or soymilk, the following experiment was carried out.

### Experiment 3 -1 :

### Preparation of test aqueous solutions

Aqueous saccharide solutions with a concentration of 2.0, 3.0, 4.0 or 10.0% were prepared using the agent for lowering unpleasant taste and/or smell containing the powdery saccharide mixture, containing on a dry solid basis 58.1% of saccharide derivatives of α,α-trehalose (4.1% of α-glucosyl α,α-trehalose, 52. 5% of α-maltosyl α,α-trehalose, 1.1% of α-maltosyl α,α-trehalose, 0.4% of α-glycosyl α,α-trehalose), prepared in the following Example 2 as an effective ingredient. Five kinds of aqueous solutions containing 3.8% of leucine, 3.0% of isoleucine, 4.0% of valine, 4.0% of *"aojiru"* (green vegetable juice) or 20% of soymilk were prepared. Test aqueous solutions were prepared by admixing any one of the five aqueous solutions in an equal volume of the aqueous saccharide solution with a concentration of 2.0, 3.0, 4.0 or 10.0% as shown in the following Table 3. As a result, the test aqueous solutions contained any one of 1.9% of leucine, 1.5% of isoleucine, 2.0% of valine, 2.0% of *"aojiru"* (greenvegetable juice) and 10.0% of soymilk and any one of 1.0, 1.5, 2.0 and 5% of the agent for lowering unpleasant taste and/or smell to the total amount of the test solution, on a dry solid basis. As controls, aqueous solutions containing 1.9% of leucine, 1.5% of isoleucine, 2.0% of valine, 2.0% of *"aojiru"* (green vegetable juice) or 10.0% of soymilk on a dry solid basis without the agent were prepared by admixing with an equal volume of water instead of the aqueous saccharide solutions.

### Experiment 3-2:

### Judgement of effect on lowering unpleasant taste and/or smell

The effect on lowering unpleasant taste and/or smell was judged using the test aqueous solutions by a panel test using 11 panels. Three test aqueous solutions containing an amino acidwere examined about bitter taste, while *"aojiru"* (green vegetable juice) and aqueous soymilk solution were examined about their inherent taste and smell. The criteria of judgement are as follows: "Not effective (symbol "-")" meaning of that the test aqueous solution showed no difference in harsh taste from that of the control aqueous solution, "Slightly effective (symbol "+")", the test aqueous solution showed weaker harsh taste than the control aqueous solution but the deference was not significant, "Effective (symbol "++")", the test aqueous solution showed a slight harsh taste but it was significantly weaker than that of the control aqueous solution, and "Strongly effective (symbol "+++")", the test aqueous solution showed almost no harsh taste. The results are in Table 3. In the judgement for each test aqueous solution, ten or more of 12 panels answered the same judgement for all test aqueous solutions.

**Table 3**

| Concentration of substance having unpleasant taste and/or smell | Concentration of the agent for lowering unpleasant taste and/or smell (concentration of saccharide derivatives of α,α-trehalose) | | | |
|---|---|---|---|---|
| | 1 (0.6) | 1.5 (0.9) | 2.0 (1.2) | 5.0 (3.0) |
| 1.9% Aqueous L-leucine solution | - | - | + | ++ |
| 1.5% Aqueous L-isoleucine solution | - | + | ++ | +++ |
| 2.0% Aqueous L-valine solution | - | - | + | ++ |
| 2.0% Aqueous *"aojiru"* solution | - | - | + | + |
| 10.0% Aqueous soymilk Solution | - | - | + | ++ |

As evident of the result in Table 3, the agent containing saccharide derivatives of α,α-trehalose as an effective ingredient for lowering unpleasant taste and/or smell at the concentration of 1.5% (corresponding to 0.9% of saccharide derivatives of α,α-trehalose) lowered the bitter taste of L-isoleucine, and at the concentration of 2.0 or 5.0% (corresponding to 1.2 or 3.0% of saccharide derivatives of α,α-trehalose) lowered unpleasant taste and/or smell. The agent more strongly exerted the effect, as its concentration was more. The effect of saccharide derivatives of α,α-trehalose on lowering unpleasant taste and/or smell was exerted in a dose-dependent manner.

### Experiment 4:

### Effect of saccharide derivatives of α,α-trehalose on inhibiting the production of hydrogen sulfate

Hydrogen sulfate, produced due to the decomposition of sulfur containing amino acids in compositions, is known to be one of causes of foreign smells. To confirm the effect of saccharide derivatives of α,α-trehalose on inhibiting the production of hydrogen sulfide, the following experiment was carried out.

### Experiment 4-1:

### Effect of saccharide derivatives of α,α-trehalose on inhibiting the production of hydrogen sulfide from L-cysteine due to heat-decomposition

Two and half grams of precisely weighted L-cysteine hydrochloride (special reagent grade) and on a dry solid basis 5 g of a precisely measured saccharide sample; i.e. hydrous crystalline α,α-trehalose (reagent grade, purity 99.0% or more, commercialized by Hayashibara Biochemical Laboratories, Inc., Okayama, Japan), α-maltosyl α,α-trehalose prepared in the following Example 5 (purity 98.1%), or a reagent grade maltotetraose (purity 97.0% or more, commercialized by Hayashibara Biochemical Laboratories, Inc., Okayama, Japan); were placed in a 50-ml volume measuring flask and dissolved in deionized water to give a final volume of 50 ml. As a control, 2.5 g of precisely measured L-cysteine hydrochloride (special reagent grade) was dissolved in deionized water to give a final volume of 50 ml. Five ml of each sample was place into a 20-ml volume vial, sealed with a butyl gum cap, and kept at 80°C for 15 minutes in an incubator. Hydrogen sulfide contained in 10 ml of the resulting headspace gas was measured by "GASTECH No.4 LT", a hydrogen sulfide detector commercialized by GL Science Corporation, under an aspiration time of one minute. The resulting value of the production of hydrogen sulfide of each test sample was compared with the value of control defined as 100 to calculate the relative value of the production of hydrogen sulfide. And then, the relative rate of inhibiting the production of hydrogen sulfide was calculated by 100 minus the relative value. The result is shown in Table 4.

**Table 4**

| Saccharide | Relative rate of inhibiting the production of hydrogen sulfide |
|---|---|
| Non (Control) | 0 |
| α,α-Trehalose | 52 |
| α-Maltosyl α,α-trehalose | 36 |
| Maltotetraose | 12 |

### Experiment 4-2:

### Effect of saccharide derivatives of α,α-trehalose on inhibiting the production of hydrogen sulfide from chicken egg due to heat-decomposition

Ten grams of an egg solution prepared by mixing a commercialized chicken egg with an equal weight of deionized water, and on a dry solid basis 5g of a precisely measured saccharide sample; i.e. hydrous crystalline α,α-trehalose (food grade, purity 97.0% or more, commercialized by Hayashibara Biochemical Laboratories, Inc., Okayama, Japan), sucrose (a commercialized granulated sugar), a syrup containing saccharide derivatives of α,α-trehalose prepared in the following Example 1, or a syrup containing saccharide derivatives of α,α-trehalose prepared in the following Example 6 (hereinafter, it is called as "hydrogenated syrup containing saccharide derivatives containing α,α-trehalose"); were placed in a 50-ml volume measuring flask, and admixed with 5 ml of 500 mM phosphate buffer (pH 7.0) and deionized water to give a final volume of 50 ml. As a control, 10 g of an egg solution was admixed with deionized water to give a final volume of 50 ml. Five milliliters of each of the samples was placed into a 20-ml volume vial, sealed with a butyl gum cap, and kept at 80° C for 60 minutes in an incubator. Hydrogen sulfide contained in 10 ml of the resulting headspace gas was measured by "GASTECH No.4 LT", a hydrogen sulfide detector commercialized by GL Science Corporation, under an aspiration time of one minute. The resulting value of the production of hydrogen sulfide of each of the test samples was compared with the value of control defined as 100 to calculate a relative value of the production of hydrogen sulfide. And then, the relative rate of inhibiting the production of hydrogen sulfide was calculated by 100 minus the relative value. The result is shown in Table 5.

**Table 5**

| Saccharide | Relative rate of inhibiting the production of hydrogen sulfide |
|---|---|
| None (control) | 0 |
| Sucrose | 14 |
| α,α-Trehalose | 30 |
| Syrup containing saccharide derivatives of α,α-trehalose | 57 |
| Hydrogenated syrup containing saccharide derivatives of α,α-trehalose | 25 |

As evidence of the result in Table 4, all of three saccharides used in the experiment inhibited the production of hydrogen sulfide from L-cysteine as a sulfur containing amino acid due to heat-decomposition. α-Maltosyl α,α-trehalose was more effective than maltotetraose but not inferior α,α-trehalose. As evidence of the result in Table 5, all of four saccharides used in the experiment more inhibited the production of hydrogen sulfide from the solution of whole egg due to heat-decomposition than the control. The syrup containing saccharide derivatives of α,α-trehalose was most effective. The rate of the inhibition became lower in the order of α,α-trehalose, hydrogenated syrup containing saccharide derivatives of α,α-trehalose, and sucrose. It was revealed that the saccharide derivatives of α,α-trehalose or the saccharide mixtures containing thereof effectively inhibited the production of hydrogen sulfide from sulfur containing amino acids contained in compositions due to heat-decomposition. Therefore, they can be used for lowering foreign smell of hydrogen sulfide from compositions.

### Experiment 5:

### Effect of saccharide derivatives of α,α-trehalose on inhibiting the generation of fishy smell

Fishy smell is caused by amines, hydrogen sulfide or aldehydes produced due to acidic putrefaction or denaturation. To confirm the effect of saccharide derivatives of α,α-trehalose on inhibiting the production of such compounds, the following experiment was carried out.

### Experiment 5-1:

### Preparation of Test Samples

Five grams of minced mackerel, prepared by mincing commercialized mackerel without head part, internal organs and bone with a mincer to homogeneity, was placed in a 20-ml vial, and admixed with 5 ml of an aqueous solution containing on a dry solid basis 5% of "TREHA®", a food grade hydrous α,α-trehalose commercialized by Hayashibara Biochemical laboratories, Inc., Okayama, Japan (purity 99.0% or more), sucrose (a commercialized granulated sugar), or a syrupy saccharide mixture containing saccharide derivatives of α,α-trehalose prepared in Example 1. The resulting vials were sealed with a butyl gum cap to prepare test samples. As a control, a vial containing 5 g of the minced mackerel and 5 ml of deionized water was sealed with a butyl gum cap for a control sample. These samples were heated in boiled water for 15 minutes, cooled in running water, and heated at 80° C for five minutes. The resulting headspace gas was taken from each of the vials and allowed to measure the contents of amines, hydrogen sulfide and aldehydes.

### Experiment 5-2:

### Measurement of the Content of Amines

Measurement of the content of amines was carried out by subjecting 2 ml of the headspace gas to analysis by GC-14B gas chromatography, a hydrogen flame ionizing detector commercialized by Shimazu Co., Ltd., Kyoto, Japan, with flowing helium gas as a carrier gas at a flow rate of 1 ml/minute, and using DB-5 capillary column, 30 m in length and 0.25 mm in internal diameter (df=0.25µm, sprit rate 1/30), commercialized by J & W Company, with an increasing column temperature from 40° C to 250° C at a rate of 5° C/minute. The amount of total amine was calculated by totalizing the amount of trimethylamine and dimethylamine.

### Experiment 5-3:

### Measurement of the content of hydrogen sulfide

Similarly as in Experiment 4, the content of hydrogen sulfide was measured using 10 ml of a headspace gas by "GASTECH No.4 LT", a hydrogen sulfide detector commercialized by GL Science Corporation, under an aspiration time of one minute.

### Experiment 5-4:

### Measurement of the content of aldehydes

Measurement of the content of aldehydes was carried out by subjecting 2ml of the headspace gas to analysis by GC-14B gas chromatography, a hydrogen flame ionizing detector commercialized by Shimazu co., Ltd., Kyoto, Japan, with flowing helium gas as a carrier gas in 1 ml/minute, and using TC-FFAP capillary column, 30 m in length and 0.52 mm in internal diameter (df=1µm, sprit rate 1/30), commercialized by GL Science Company, with an increasing column temperature from 40° C to 250° C at a rate of 5°C/minute. The amount of total aldehydes was calculated by totalizing the measured amount of nine kinds of aldehydes listed in Table 7.

The values of the production of amines, hydrogen sulfide and aldehydes of each test sample were compared with the value of control defined as 100 to calculate the relative values thereof. And then, the relative rates of inhibiting the production of amines, hydrogen sulfide and aldehydes were respectively calculated by 100 minus each of the relative values. The result of amines and hydrogen sulfide is in Table 6 and that of aldehydes is in Table 7.

**Table 6**

| Amines/hydrogen sulfide | Saccharide | | | |
|---|---|---|---|---|
| | None (Control) | Sucrose | α,α-trehalose | Syrup containing saccharide derivatives of α,α-trehalose |
| Trimethylamine | 0 | 12 | 58 | 78 |
| Dimethylamine | 0 | -34 | 44 | 22 |
| Total amine | 0 | -8 | 52 | 56 |
| Hydrogen sulfide | 0 | 12 | 26 | 19 |

**Table 7**

| Aldehydes | Saccharide | | | |
|---|---|---|---|---|
| | None (Control) | Sucrose | α,α-trehalose | Syrup containing saccharide derivatives of α,α-trehalose |
| Acetaldehyde | 0 | 13 | 73 | 54 |
| Propanal | 0 | 32 | 98 | 96 |
| Butanal | 0 | -13 | 100 | 100 |
| Pentanal | 0 | -15 | 83 | 100 |
| Hexanal | 0 | 33 | 93 | 100 |
| Heptanal | 0 | 54 | 88 | 95 |
| Octanal | 0 | 43 | 100 | 68 |
| Nonanal | 0 | -54 | 100 | 100 |
| Decanal | 0 | 57 | 76 | 69 |
| Total aldehydes | 0 | 20 | 80 | 68 |

As evidence of the result in Table 6, the minced mackerel containing saccharide derivatives of α,α-trehalose or α,α-trehalose was more effectively inhibited in the production of amines or hydrogen sulfide than the control. Further, the saccharide derivatives of α,α-trehalose more effectively inhibited the production than α,α-trehalose. While, sucrose more inhibited the production of trimethylamine than the control but more enhanced the production of dimethylamine than the control. As a result, the production of total amines was increased rather than the control. Sucrose more inhibited the production of hydrogen sulfide than the control but the inhibitory level was lower than that with the saccharide derivatives of α,α-trehalose or α,α-trehalose. As evidence of the result in Table 7, the saccharide derivatives of α,α-trehalose or α,α-trehalose also more effectively inhibited the production of aldehydes from the minced mackerel due to heating than the control. While, sucrose slightly inhibited the production of total aldehydes than the control, but enhanced the production of some kinds of aldehydes. These results revealed that the saccharide derivatives of α,α-trehalose effectively inhibit the production of amines, hydrogen sulfide and aldehydes from compositions such as fish meats and that they are useful for lowering foreign taste or smell caused by amines, hydrogen sulfide and aldehydes.

### Experiment 6:

### Effect of saccharide derivatives of α,α-trehalose on inhibiting the generation of stuffy smell from cocoa

"Stuffy smell", meaning a kind of foreign smell generated from cocoa, chocolate, and compositions thereof during their processes, is known to deteriorate their flavor. 2,3-Butandion and lower aldehydes are known as a causative substance of foreign smell. On the other hand, isobutanol, classified in lower aldehydes, is known as one of the aromatic ingredients of chocolates. To confirm the effect of saccharide derivatives of α,α-trehalose on inhibiting the production of such compounds, the following experiment was carried out. Four milliliters of 2.5%, on a dry solid basis, saccharide solution containing either of sucrose, "TREHA®" (an α,α-trehalose commercialized by Hayashibara Biochemical Laboratories, Inc., Okayama, Japan), a commercialized enzyme-treated starch syrup and a syrupy saccharide mixture containing saccharide derivatives of a,a-trehalose prepared in Example 1 (on a dry solid basis about 53% of saccharide derivatives of α,α-trehalose) was placed in a 20-ml vial and admixed with 1 g of cacao powder. The resulting vial was covered with a plastic warp and heated by a microwave oven (500W) for five seconds. As a control, 4 ml of distilled water and 1g of cacao powder were placed in the vial and treated similarly as in the saccharide solutions. These vials were sealed with a butyl gum cap over the plastic wrap and heated at 100° C in a heat block for five minutes. Two milliliters of the resulting headspace gas was subjected to gas chromatography to measure the contents of lower aldehydes and 2, 3-butandion according to the method in Experiment 5-4. The amount of total aldehydes was calculated by totalizing the measured amounts of three kinds of aldehydes and other aldehydes listed in Table 8.

The resulting value of the production of aldehydes or 2,3-butandion of each of the test samples was compared with the value of control defined as 100 to calculate the relative value of the production of them. And then, the relative rate of inhibiting the production of them was calculated by 100 minus the relative value. The result is shown in Table 8.

**Table 8**

| Substance | Saccharide | | | | |
|---|---|---|---|---|---|
| | None (control) | Sucrose | Enzyme-treated syrup | α,α- Trehalose | Saccharide derivatives of α,α-trehalose |
| Acetaldehyde | 100 | 44 | 11 | 50 | 0 |
| Propanal | 100 | 43 | 20 | 47 | 20 |
| Isobutanal | 100 | 52 | 22 | 58 | 23 |
| Other aldehydes | 100 | 0 | 0 | 0 | 0 |
| Total aldehydes | 100 | 48 | 19 | 53 | 18 |
| 2,3-Butandion | 100 | 95 | 91 | 100 | 100 |

As evidence of the result in Table 8, sucrose or α,α-trehalose strongly inhibited the production of lower aldehydes. α,α-Trehalose or the saccharide derivatives of α,α-trehalose almost completely inhibited the production of 2,3-butandion. Enzyme-treated starch syrup hardly inhibited the production of lower aldehydes and had the least effect on inhibiting the production of 2,3-butandion from the four tested saccharide samples. In a separately carried panel test, all of nine panels judged that the smell of a sample containing α,α-trehalose or the saccharide derivatives of α,α-trehalose had a favorite smell, and the saccharide derivatives of α,α-trehalose was more preferable than α,α-trehalose. The difference between the two panel test was estimated that that cocoa containing α,α-trehalose was considerably inhibited in the production of isobutanal as an aromatic ingredient of cocoa. The above results revealed that the saccharide derivatives of α,α-trehalose selectively inhibited the production of aldehydes and 2,3-butandion, which causes stuffy smell from compositions such as cocoa and chocolate, and then they can be used to lower foreign taste and smell due to the production of aldehydes and 2,3-butandion.

### Experiment 7:

### Effect of saccharide derivatives of α,α-trehalose on improving aftertaste of sweetener

### Experiment 7-1:

### Preparation of test solution

To confirm the effect of saccharide derivatives of α,α-trehalose on improving the aftertaste of sweeteners, the following experiment was carried out.

### <Preparation of solution containing sucrose>

Ten % of a saccharide solution containing on a dry solid basis about 53% of syrupy saccharide derivatives of α,α-trehalose , prepared in Example 1, and sucrose (granulated sugar) in a ratio of 1:9, 2:8 or 3:7 was prepared. As a control, 10% of sucrose solution was prepared.

### <Preparation of solutions containing high intensity sweetener>

As test solutions, the followings were prepared: 0.083% solution of acesulfame-K, 0.01% solution of sucralose, 0.083% solution of "αG-SWEET", a glycosyl stevia commercialized by Toyo Sugar Refining Co, Ltd., Tokyo, Japan, and 0.05% solution of "Aspartame" an L-aspartyl-L-phenylalaninemethylester commercialized by Ajinomoto Co., Ltd., Tokyo Japan, which each containing 1, 2 or 5%, on a dry solid basis, of a syrupy saccharide mixture, containing 0.6, 1.2 or 3% of the saccharide derivatives of α,α-trehalose. As a control, solutions containing either of 10% of sucrose, 0.083% of acesulfame-K, 0.01% of sucralose, 0.083% of glycosyl stevia, or 0.05% of L-aspartyl-L-phenylalaninemethylester were prepared. The concentrations of these high intensity sweeteners were equal to the sweetening power of the solution containing 10% sucrose.

### Experiment 7-2:

### Valuation of aftertaste of sweetener

Effect of the agent containing saccharide derivatives of α,α-trehalose as an effective ingredient on improving aftertaste of sweetener was evaluated by a panel test using the above test solution. The panel test was carried out by 17 panels for evaluating the samples of sucrose and 15 panels for evaluating the samples of high intensity sweeteners. The criteria of judgement are as follows: "Inferior" meaning of that the aftertaste of the test solution was more deteriorated than the control solution, "Not effective", the aftertaste of the test solution was almost equal to the control solution, "Slightly effective" , the aftertaste of the test solution was slightly improved, "Effective", the aftertaste of the test solution was obviously improved (including the case of that the remaining aftertaste was not sensed soon) . The test solution was judged to have the effect on lowering the unpleasant taste when the rate of panels judging as "Slightly effective" or "Effective" to the total panels was over 60%. Table 9, 10 or 11 shows the result for the test solution containing sucrose, glycosyl stevia or sucralose. The numerical results for the test solution containing L-aspartyl-L-phenylalaninemethylester or acesulfame-K were omitted because the above solutions gave substantially the same result as in the glycosyl stevia.

**Table 9**

| Ratio of syrup containing saccharide derivatives of α,α-trehalose to sucrose (dry solid basis) | Number of Panels | | | | Rate of panels judging as slightly effective or effective (%) |
|---|---|---|---|---|---|
| | Inferior | Not effective | Slightly Effective | Effective | |
| 1:9 | 7 | 2 | 7 | 1 | 47 |
| 2:8 | 1 | 2 | 11 | 3 | 82 |
| 3:7 | 0 | 2 | 7 | 8 | 88 |

**Table 10**

| Concentration of syrup containing saccharide derivatives of α,α-trehalose (dry solid basis) | Number of panels | | | | Rate of panels judging as slightly effective or effective (%) |
|---|---|---|---|---|---|
| | Inferior | Not effective | Slightly Effective | Effective | |
| 0.5 | 2 | 6 | 5 | 1 | 40 |
| 1 | 2 | 4 | 6 | 3 | 60 |
| 2 | 1 | 2 | 8 | 4 | 80 |
| 5 | 0 | 2 | 5 | 8 | 87 |

**Table 11**

| Syrup containing saccharide derivatives of α,α-trehalose (dry solid basis) | Number of panels | | | | Rate of panels judging as slightly effective or effective (%) |
|---|---|---|---|---|---|
| | Inferior | Not effective | Slightly effective | Effective | |
| 0.5 | 3 | 8 | 3 | 2 | 33 |
| 1 | 3 | 6 | 4 | 2 | 40 |
| 2 | 3 | 3 | 6 | 3 | 60 |
| 5 | 3 | 3 | 5 | 4 | 60 |

As evidence of the result in Table 9, the agent of the present invention was revealed to improve the aftertaste of sucrose when 20% of sucrose was replaced with the agent. As evidence of the result in Table 10, the agent was revealed to improve the aftertaste of glycosyl stevia in a dose-dependent manner when containing at a concentration of 1%, corresponding to about 0.6% of the saccharide derivatives of α,α-trehalose, or more on a dry solid basis. The agent was also revealed to improve the aftertaste of sucralose when containing at a concentration of 2 or 5%, containing about 1.2% or 3%. However, six panels still judged as "Inferior" or "Not effective" at a concentration of 5%. The reason of such disagreement among the panels about the solution containing sucralose might be differences among the panels' preferences against the taste of sucralose. As a result, the agent for lowering unpleasant taste and/or smell of the present invention was revealed to be useful for improving aftertaste of sucrose or high intensity sweeteners, and can be used for foods and beverages containing such sweeteners. Although concrete values were not shown, all panels judged solutions containing any one of the high intensity sweeteners with 2% or 5% of the agent (with about 1.2% or 3% of saccharide derivatives of α,α-trehalose) on a dry solid basis, used in this experiment, to be more increased sweetness than the solutions without the agent. The agent increased the sweetening power of high intensity sweeter up to 20-30% with the agent at the concentration of 2%, and about 50-60% with the agent at the concentration of 5%.

The above results revealed that the agent for lowering unpleasant taste and/or smell of the invention, containing saccharide derivatives of α,α-trehalose, is useful for producing high quality compositions to lower unpleasant taste and/or smell of the compositions by incorporating therein.

The following examples concretely explain the agent for lowering unpleasant taste and/or smell or compositions therewith. However, the present invention should not be restricted to these examples.

### <Agent for lowering unpleasant taste and/or smell>

The agents disclosed in the following examples lower unpleasant taste and/or smell of compositions including foods, beverages, cosmetics, quasi-drugs, pharmaceuticals, commodities, feeds, pet foods, groceries or chemical industrial products when incorporated therein.

### Example 1

A corn starch was prepared into an about 20% of starch suspension, admixed with calcium carbonate to give a final concentration of 0.1%, and adjusted to pH 6.5. The resulting solution was admixed with 0.2%/g-starch on a dry solid basis of "TERMAMYL 60L", an α-amylase commercialized by NovoZyme A/S, Bagsværd, Denmark, and followed by the enzyme reaction at 95°C for 15 minutes. After autoclaved at 120°C for 10 minutes, the resulting reaction mixture was cooled to 50° C, adjusted to pH 5.8, admixed with 5 units/g-starch of maltotetraose-forming amylase disclosed in Japanese Patent Publication (Kokai) No. 240,784/88, commercialized by Hayashibara Biochemical Laboratories Inc., Okayama, Japan, and 500 units/g-starch of isoamylase commercialized by Hayashibara Biochemical Laboratories Inc., Okayama, Japan, and followed by the enzymatic reaction for 48 hours. The reaction mixture was further admixed with 30 units/g-starch of "α-AMYLASE 2A", α-amylase commercialized by Ueda Chemical Industries Co., Ltd., Hyogo, Japan and followed by the enzyme reaction at 65° C for four hours. After autoclaved at 120° C for 10 minutes, the reaction mixture was cooled to 45°C, admixed with 2 units/g-starch of a non-reducing saccharide-forming enzyme originated from *Arthrobacter* sp. Q36 (FREM BP-4316), disclosed in Japanese Patent Publication (Kokai) No. 143, 876/95, and followed by an enzymatic reaction for 48 hours. The reaction mixture was kept at 95° C for 10 minute, cooled and filtered to obtain a filtrate. According to conventional manner, the resulting filtrate was decolored with activated charcoal, desalted and purified with ion exchangers in H- and OH- forms, and concentrated into 70% syrup in a yield of about 90% to the material starch on a dry solid basis. The syrup showed DE 13.7 and contained 52.5% of α-maltosyl α,α-trehalose (alias α-maltotriosyl α-glucoside), 4.1% of α-glucosyl α,α-trehalose (alias α-maltosyl α-glucoside), 1.1% of α-maltotriosyl α,α-trehalose (alias α-maltotetraosyl α-glucoside), and 0.4% of other α-glycosyl α,α-trehaloses, on a dry solid basis, as saccharide-derivatives of α,α-trehalose. The syrup is used as an agent for lowering unpleasant taste and/or smell. It is also used as an agent for inhibiting the production of aldehydes and/or amines.

### Example 2

The syrup prepared in Example 1 was spray-dried in a usual manner to prepare an amorphous powder. The product shows a low hygroscopicity and a satisfactory solubility in water, and is advantageously used as the agent for unpleasant taste and/or smell of compositions. In addition, it is suitable as a powdering base for juices, oils, or fats because it inhibits the denaturation of proteins or the oxidation and decomposition of lipids, and lowers unpleasant taste and/or smell of newly produced compounds such as aldehydes.

### Example 3

A saccharified solution, desalted with ion exchangers in H-form and OH-form, prepared in Example 1, was subjected to a column chromatography using "DOWEX 50W-X4 (Mg²⁺-form)", a strong acid cation-exchange resin commercialized by Dow Chemical Company, Michigan, USA. The resin was packed into four jacketed stainless steel columns having an inner diameter of 5.4 cm, which were then cascaded in series to give a total gel bed depth of 20 m. Under the conditions of keeping the inner column temperature at 55°C, the saccharide solution was fed to the columns in a volume of 5 % (v/v) and fractionated by feeding to the columns hot water heated to 55° C at an SV (space velocity) of 0.13 to remove high content fractions of glucose and maltose, and then high content fractions of saccharide-derivative of α,α-trehalose were collected. The resulting saccharide solution was further purified and concentrated, and then spray-dried to prepare an amorphous powder comprising saccharide-derivatives of α,α-trehalose in a high content. The product contained 70.2% of α-maltosyl α,α-trehalose, 6.1% of α-glucosyl α,α-trehalose, 2.1% of α-maltotriosyl α,α-trehalose, and 4.1% of other α-glycosyl α,α-trehalose, on a dry solid basis, as saccharide-derivatives of α,α-trehalose. Since the product shows a low hygroscopicity and a satisfactory solubility in water, it is advantageously used as an agent for lowering unpleasant taste and/or smell. It is also used as an agent for inhibiting the production of aldehydes and/or amines. In addition, it can be used as a powdery sweetener or powdering base having a satisfactory fluidity suppressed absorbing and caking.

### Example 4

One part by weight of a potato starch dissolved in six parts by weight of water was admixed with "NEOSPITASE", an α-amylase commercialized by Nagase & Co., Ltd., Osaka, Japan, to give a final concentration of 0.01%/starch, and adjusted to pH 6.0. The resulting starch suspension was kept at 85 to 90° C to be gelatinized and liquefied simultaneously until DE 1.0 and heated immediately at 120° C for five minutes. Then, the solution was rapidly cooled to 55° C, adjusted to pH 7.0, admixed with 150 units/g-starch on a dry solid basis of "PULULLANASE", an pullulanase (EC 3.2.1.41) commercialized by Hayashibara Biochemical Laboratories Inc., Okayama, Japan, and eight units/g-starch on a dry solid basis of maltotetraose-forming amylase, disclosed in Japanese Patent Publication (Kokai) No. 240,784/88, commercialized by Hayashibara Biochemical Laboratories Inc., Okayama, Japan, and followed by the enzymatic reaction at 50°C and pH 7.0 for 36 hours. After autoclaved at 120° C for 10 minutes, the reaction mixture was cooled to 53°C, admixed with 2 units/g-starch of non-reducing saccharide-forming enzyme originated from *Arthrobacter* sp. S34 (FREM BP-6450), disclosed in Japanese Patent Publication (Kokai) No. 228,980/00, and followed the enzymatic reaction for 64 hours. The reaction mixture was kept at 95° C for 10 minutes, cooled and filtered to obtain a filtrate. According to the conventional manner, the resulting filtrate was decolored with activated charcoal, desalted and purified with ion exchangers in H- and OH- forms, and then concentrated. The concentrate was spray-dried to obtain an amorphous powder containing saccharide-derivatives of α,α-trehalose in ayield of about 90% to the material starch on a dry solid basis. The product showed DE 11.4 and contained 62.5% of α-maltosyl α,α-trehalose, 2.1% of α-glucosyl α,α-trehalose, 0.8% of α-maltotriosyl α,α-trehalose, and 0.5% of other α-glycosyl α,α-trehalose, on a dry solid basis. Since the product shows a low hygroscopicity and a satisfactory solubility in water, it is useful as an agent for lowering unpleasant taste and/or smell of compositions. In addition, it can be used as a agent for inhibiting the production of aldehydes and/or amines or a powdering base.

### Example 5

Aqueous solution containing 20% of a reagent grade maltotetraose (purity 97.0% or higher), commercialized by Hayashibara Biochemical Laboratories Inc., Okayama, Japan, was admixed with two units/g-saccharide of non-reducing saccharide-forming enzyme, disclosed in Japanese Patent Publication (Kokai) No. 143,876/95, and followed by the enzymatic reaction at 46° C for 48 hours to obtain a saccharide solution containing 79.8% of α-maltosyl α,α-trehalose on a dry solid basis. After adjusted to pH 6.0, the saccharide solution was admixed with 10 units/g-saccharide of β-amylase, commercialized by Nagase & Co., Ltd., Osaka, Japan, and followed by the enzymatic reaction at 50° C for 48 hours for the purpose of hydrolyzing maltotetraose. After autoclaved at 120° C for 10 minutes, the reaction mixture was cooled and filtrated. The resulting filtrate was subjected to a column chromatography using "XT-1016 (Na⁺-form, degree of cross linking 4%)", a strong acid cation-exchanger resin commercialized by Rohm and Hass Japan K.K., Fukushima, Japan, to collect fractions highly containing α-maltosyl α,α-trehalose. The saccharide solution was purified, concentrated, and spray-dried to obtain an amorphous powder highly containing α-maltosyl α,α-trehalose. The product, containing 98.1% of α-maltosyl α,α-trehalose, has a low reducingpower less than the detection limit of Somogyi-Nelson method. The product shows a low hygroscopicity and a satisfactory solubility in water. Since the product shows no reducibility, it is advantageously used as the agent for lowering unpleasant taste and/or smell of compositions. It is also used as the agent for inhibiting the production of aldehydes and/or amines. Since the product shows no reducibility, it is advantageously used healthy foods, cosmetics, medicated cosmetics, pharmaceuticals, feeds, pet-foods, chemical industrial products, etc., comprising compounds inactivated by Maillard reaction as effective ingredients. The product was resolved in water and treated with activated charcoal to be free from pyrogens.

The resultant was spray-dried to prepare an amorphous powder highly containing α-maltosyl α,α-trehalose. Since the product shows a low hygroscopicity and a satisfactory solubility in water, it is advantageously used as the agent for lowering unpleasant taste and/or smell. In addition, since the agent is free from pyrogens, it is suitable for medical use.

### Example 6

The syrup containing saccharide derivatives of α,α-trehalose, prepared in Example 1, was dissolved in water to give a saccharide concentration of about 60% and admixed with about 8.5% of Raney nickel. The mixture was autoclaved at 128° C with stirring and treated with hydrogen at a pressure of 80 kg/cm² to convert reducing sugars coexisting with saccharide-derivatives of α,α-trehalose, such as glucose and maltose, into corresponding sugar alcohols. After separated from Raney nickel, the resulting solution was decolored, desalted, and concentrated to obtain syrup. The product contains about 58% of saccharide derivatives of α,α-trehalose (about 53% of α-maltosyl α,α-trehalose) on a dry solid basis. The product has a satisfactory water-solubility and is advantageously used as the agent for lowering unpleasant taste and/or smell. It is also suitable as the agent for inhibiting the production of aldehydes and/or amines or a powdering base.

### Example 7

The amorphous powder, containing saccharide derivatives of α,α-trehalose, prepared in Example 3, was dissolved in water to give a saccharide concentration of about 60% was admixed with about 9% of Raney nickel. The mixture was autoclaved at 130°C with stirring and treated with hydrogen at a pressure of 75 kg/cm² to convert reducing sugars coexisting with saccharide-derivatives of α,α-trehalose, such as glucose and maltose, into corresponding sugar alcohols. After separated from Raney nickel, the resulting solution was decolored, desalted, and concentrated to obtain syrup. Further, the syrup was spray-dried in a usual manner to obtain an amorphous powder. The product, containing about 82% of saccharide derivatives of α,α-trehalose (about 70% of α-maltosyl α,α-trehalose) on a dry solid basis, shows a low hygroscopicity and a satisfactory water-solubility and advantageously used as the agent for lowering unpleasant taste and/or smell of compositions. It is also used as the agent for inhibiting the production of aldehydes and/or amines, or a powdering base.

### Example 8

About 6% starch suspension of potato starch was gelatinized by heating, adjusted to pH4.5 at 50° C, admixed with 2, 500 units/g-starch of isoamylase commercialized by Hayashibara Biochemical Laboratories, Inc., Okayama, Japan and followed by the enzyme reaction for 20 hours. The resulting reaction mixture was adjusted to pH6.0 and autoclaved at 120°C for 10 min. After cooled to 45°C, the reaction mixture was admixed with 150 units/g-starch of "TERMAMYL 60L" , an α-amylase commercialized by NovoZyme A/S, Bagsværd, Denmark and followed by the enzyme reaction for 24 hours. The reaction mixture was autoclaved at 120° C for 20 minutes. After cooled to 45° C, the reaction mixture was admixed with 2 units/g-starch of non-reducing saccharide-forming enzyme originated from *Arthrobacter* sp. Q36 (FREM BP-4316), disclosed in Japanese Patent Publication (Kokai) No. 143,876/95, and followed by the enzymatic reaction for 64 hours. The reaction mixture was kept at 95° C for 10 minute, cooled and filtered to obtain a filtrate. According to the conventional manner, the resulting filtrate was decolored with activated charcoal, desalted and purified with ion exchangers in H- and OH- forms, and then concentrated into a 65% syrup in a yield of about 89% to the material starch on a dry solid basis. The product contains 3.2% of α-glucosyl α,α-trehalose, 6.5% of α-maltosyl α,α-trehalose, 28.5% of α-maltotriosyl α,α-trehalose, and 11.9% of α-glycosyl α,α-trehalose having six glucose residues or more. The product is used as the agent for lowering unpleasant taste and/or smell of compositions. It is also used as the agent for inhibiting the production of aldehydes and/or amines, or a powdering base.

The product was hydrogenated according to the method in Example 7 to convert coexisting reducing saccharides such as glucose and maltose into corresponding sugar alcohol. The product, containing about 50% of saccharide derivatives of α,α-trehalose (about 6% of α-maltosyl α,α-trehalose) on a dry solid basis, is advantageously used as the agent for lowering unpleasant taste and/or smell of compositions. Since the product shows no reducibility, it is suitable for cosmetics, quasi-drugs, pharmaceuticals, healthy foods, etc. , comprising compounds inactivated by Maillard reaction as effective ingredients. In addition, it is used as the agent for inhibiting the production of aldehydes and/or amines of compositions or a powdering base

### Example 9

Thirty-three percent of starch suspension was admixed with calcium carbonate to give a final concentration of 0. 1%, and adjusted to pH 6.0. The resulting solution was admixed with 0.2%/g-starch on a dry solid basis of "TERMAMYL 60L", an α-amylase commercialized by NovoZyme A/S, Bagsværd, Denmark, and followed by the enzymatic reaction at 95° C for 15 minutes. After autoclaved at 120°C for 10 minutes, the reaction mixture was cooled to 50°C, admixed with 500 units/g-starch of isoamylase, commercialized by Hayashibara Biochemical Laboratories Inc., Okayama, Japan and 1.8 units/g-starch of maltohexaose maltoheptaose producing amylase, and followed by the enzymatic reaction for 40 hours. The reaction mixture was autoclaved at 120° C for 10 minutes, cooled to 53° C, adjusted to pH 5.7, and admixed with 2 units/g-starch of non-reducing saccharide-forming enzyme originated from *Arthrobacter* sp. S34 (FREM BP-6450), disclosed in Japanese Patent Publication (Kokai) No. 228,980/00, and followed the enzymatic reaction for 64 hours. The reaction mixture was kept at 95° C for 10 minutes, cooled and filtered to obtain a filtrate. According to the conventional manner, the resulting filtrate was decolored with activated charcoal, desalted and purified with ion exchangers in H- and OH- forms, concentrated, and spray-dried to obtain an amorphous powder as a moisture variation inhibiting agent in a yield of about 87% to the material starch on a dry solid basis. The product contains 8.2% of α-glucosyl α,α-trehalose, 6.5% of α-maltosyl α,α-trehalose, 5.6% of α-maltotriosyl α,α-trehalose, and 21.9% of α-maltotetraosyl α,α-trehalose, 9.3% of α-maltopentaosyl α,α-trehalose, and 14.1% of α-glycosyl α,α-trehalose having eight glucose residues or more. Since the product shows a low hygroscopicity and a satisfactory solubility in water, it is advantageously used as the agent for lowering unpleasant taste and/or smell of compositions, if necessary, it is further purified according to a usual manner for the purpose of increasing the content of saccharide derivatives of α,α-trehalose. In addition, it is used as the agent for inhibiting the production of aldehydes and/or amines, or a powdering base.

The product was hydrogenated according to the method in Example 7 to convert coexisting reducing saccharides such as glucose and maltose into corresponding sugar alcohol, purified in a usual manner, and spray-dried to prepare an amorphous powder. The product, containing about 65% of saccharide derivatives of α,α-trehalose (about 6% of α-maltosyl α,α-trehalose) on a dry solid basis, has a low hygroscopicity and satisfactory water-solubility, even if further purified to increase the content of saccharide derivatives of α,α-trehalose, and advantageously used as the agent for lowering unpleasant taste and/or smell of compositions. Since the product shows no reducibility, it is suitable for cosmetics, quasi-drugs, pharmaceuticals, healthy foods, etc., comprising compounds inactivated by Maillard reaction as effective ingredients. In addition, it is used as the agent for inhibiting the production of aldehydes and/or amines of compositions or a powdering base

### Example 10

Sixty parts by weight of the powder, containing saccharide derivatives of α,α-trehalose, prepared in Example 2, was admixed with 40 parts byweight of "MABIT®", an anhydrous crystalline maltitol commercialized by Hayashibara Shoji Inc., Okayama, Japan, to obtain a powdery mixture. The product is advantageously used as the agent for lowering unpleasant taste and/or smell of compositions. It is also used as the agent for inhibiting the production of aldehydes and/or amines.

### Example 11

Seventy parts by weight of the powder, containing saccharide derivatives of α,α-trehalose, prepared in Example 2, was admixed with two parts by weight of ascorbic acid 2-glucoside commercialized by Hayashibara Biochemical Laboratories, Inc., Okayama, Japan and two parts by weight of "αG-RUTIN", a glycosyl rutin commercialized by Hayashibara Biochemical Laboratories, Inc., Okayama, Japan, to obtain a powdery mixture. The product is advantageously used as the agent for lowering unpleasant taste and/or smell of compositions. It is also used as the agent for inhibiting the production of aldehydes and/or amines.

### Example 12

Fifty parts by weight of the powder containing saccharide derivatives of α,α-trehalose prepared in Example 2 and 50 parts by weight of "TREHA®" a hydrous crystalline trehalose commercialized by Hayashibara Shoji Inc., Okayama, Japan, were mixed together to prepare a powdery mixture. The product is advantageously used as the agent for lowering unpleasant taste and/or smell of compositions. It is also used as the agent for inhibiting the production of aldehydes and/or amines.

### Example 13

### Table Sugar

Fifty parts by weight of the syrupy agent, prepared in Example 1, 46 parts by weight of anhydrous crystalline maltitol, threeparts byweight of "αG-HESPERIDIN", a glycosyl hesperidin commercialized by Toyo Sugar Refining Co, Ltd., Tokyo, Japan, one part by weight of sucralose commercialized by San-Ei Gen F.F.I. Inc., Osaka, Japan, were dissolved in 200 parts by weight of water, and spray-dried in a usual manner to obtain a powdery sweetener. The product, enabling to improve aftertaste of sucralose by effective ingredients such as saccharide derivatives of α,α-trehalose and glycosyl hesperidin, is preferably used as a sweetener for various foods, beverages, quasi-drugs or pharmaceuticals, including table sugar for coffee or black tea.

### Example 14

### Chewing Gum

Twenty parts byweight of gum base was placed in a kneader, melted at about 120° C with stirring, and cooled to 50° C. The resultant was placed in a mixer, admixed in order with 40 parts by weight of sucrose, 40 parts by weight of the agent, prepared in Example 2, one part by weight of a softening agent, a small part of a coloring agent and one part by weight of a perfumery with stirring, and kept at the temperature with stirring. The resultant was placed in an injection type of molding machine, extruded in a block form, flat-rolled gradually, and cut out to obtain a chewing gum. The product, with lowered unpleasant taste and/or smell inherent to gum bases and softening agents, is a delicious chewing gum

### Example 15

### Seasoning Extract of Dried bonito Flake

Dried bonito flake was prepared in a usual manner of boiling a fresh bonito except using a solution contains 18% of the syrupy agent, prepared in Example 1. The product was not extremely dried and inhibited in the oxidization or decomposition of lipids even after preserved for a long term. Since the product contains the agent, it is inhibited in the production of amines, aldehydes or hydrogen sulfide. Therefore, the product, with lowered unpleasant taste and/or smell including characteristic fishy smell, has a desirable taste, smell, color and mouth-feel inherent to dried bonito flake. Such desirable state is stable for a long term.

Subsequently, the product was preserved at an ambient temperature for six months, and chipped by machine. One hundred parts of the resultant was admixed with 500 parts by weight of water, boiled for five minutes, and cooled to obtain an extract of dried bonito flake. The extract, with lowered unpleasant taste and/or smell such including a characteristic fishy smell, has a desirable taste and smell inherent to dried bonito flake.

Subsequently, nine parts by weight of the extract concentrated to ten-folds was admixed with one part by weight of the syrupy agent, prepared in Example 1, dissolved with stirring and spray-dried in a usual manner to obtain a powdered soup stock. The product, with inhibited production of amines , aldehydes and hydrogen sulfide and lowered unpleasant taste and/or smell including a characteristic fishy smell, is a powdered soup stock having desirable taste and smell inherent to dried bonito flake. In addition, the product is so stable as to be free from caking and keep fluidity of just after preparation thereof, it can be used as a rawmaterial, optionally in combination with other extracts, for producing a soup stock or seasoning in the form of powder, liquid, solid or paste.

### Example 16

### Processed Raw Scallop

Raw scallop was soaked in a solution pre-cooled at 5° C, which was prepared by dissolving 9.5 parts by weight of the powdery agent, prepared in Example 2, and 0.5 part by weight of sodium carbonate in 90 parts by weight of water, and kept at 5° C for 30 minutes. The product was sliced after drained and tasted. The product, with inhibited production of amines , aldehydes and hydrogen sulfide and lowered in the unpleasant taste and/or smell such as a fishy smell characteristic to raw scallops, is preferably used as a raw material for *"sashimi",* salad or other processed foods.

### Example 17

### Fillet of Sea Bass

Four parts by weight of the agent, prepared in Example 7, 0.8 part by weight of sodium chloride and 0.01 part by weight of "LEUCOCYANIN", an extract of grape seed commercializedby Indiana Inc., Italy, were admixed with water to give 100 parts by weight of total amount, dissolved with stirring and cooled to 5°C. Fillet of fresh sea bass was soaked in the above solution, kept at 5° C, drained, and frozen quickly at -30° C. The product is lowered in the unpleasant taste and/or smell such as fishy smell and inhibited in the oxidation or decomposition of lipids. In addition, the product is fresh without the denaturation and dripping due to the preservation and defrost. Therefore, the product is preferably used as a raw material of various food products. When the product was sautéed after the preservation at -20° C for two months, and tasted, it is inhibited in the oxidation or decomposition of lipids, denaturation of protein, and the production of amines, aldehydes or hydrogen sulfide, and lowered in the unpleasant taste and/or smell. The product also has no less satisfactory taste, smell, color and mouth-feel than that of sautéed fresh fillet of sea bass.

### Example 18

### Processed Sea Urchin

Ninety-five parts by weight of fresh ovary of sea urchin, soaked within a basket in an aqueous solution containing 5% alum for 10 seconds and drained by taking up the basket from the solution, was dusted with a powdery mixture consisting of 4.5 parts byweight of the powdery agent, prepared in Example 2, and 0.5 part by weight of sodium carbonate, and kept at an ambient temperature. The product, even cooked and processed after frozen at -30° C and thaw in a usual manner, is inhibited in the oxidation or decomposition of lipids, denaturation of proteins, and dripping due to the defrost, and is lowered in the unpleasant taste and/or smell such bitter taste newly generated due to the denaturation of the sea urchin or alum. Therefore, it has a satisfactory taste, smell, color and mouth-feel.

### Example 19

### Dried blowfish

One hundred parts by weight of fillet of fresh blowfish was rolled to give a thickness of about 8 mm and soaked for 30 minute into an aqueous solution prepared by dissolving the powdery agent, prepared in Example 2, in water to give a content of 10%. After drained, the fillet was dried for overnight to obtain a dried blowfish. The product is inhibited in the production of amines, aldehydes and hydrogen sulfide and lowered in the unpleasant taste and/or smell. In addition, the product, inhibited in the oxidation and decomposition of lipids, is a satisfactorily fresh dried blowfish. The product, with lowered unpleasant taste and/or unpleasant smell, has a satisfactory taste, smell, color and mouth-feel even after roasted in a usual manner.

### Example 20

### Dried anchovy

One hundred parts by weight of water was boiled in a big iron pot, and then 2.5 parts by weight of the syrupy agent, prepared in Example 1, was dissolved and boiled further. Successively, 10 parts by weight of fresh anchovy was placed in a sieve basket and the basket was soaked into the above boiling solution to boil the anchovy. After boiled, the anchovy was taken out from the sieve basket and dried in a usual manner to obtain dried anchovy. The product is inhibited in the production of amines, aldehydes and hydrogen sulfide and lowered in the unpleasant taste and/or smell inherent to blue fishes. The product is flavorful and a satisfactory soup.

The product keeps the above condition even after the preservation at an ambient temperature for six months.

### Example 21

### Boiled and shelled clam

Three parts by weight of the powdery agent, prepared in Example 2, were dissolved in 100 parts by weight of boiling water and boiled further. Successively, 10 parts by weight of fresh clam was placed in a sieve basket and the basket was soaked into the above boiling solution to boil the clam. After boiled, the clam was taken out from the sieve basket in a usual manner to obtain boiled and shelled clam. The product is inhibited in the production of amines, aldehydes and hydrogen sulfide and lowered in the unpleasant taste and/or smell. The product can be obtained in a high yield. In addition, the product, with inhibited oxidation and decomposition of lipids, is flavorful with a satisfactory color and gloss. The product can be advantageously used for processing into *"tsukudani"* (a clam boiled in soy sauce), or as a filling for seafood curry, seasoned steamed rice with vegetables and meat.

### Example 22

### Boiled octopus

Ten parts byweight of fresh octopus was salted, kneaded, and soaked into a boiled solution in a big iron pot, which is prepared by dissolving four parts by weight of the syrupy agent, prepared in Example 1, into 100 parts by weight of water to obtain a boiled octopus. The product is lowered in the unpleasant taste and/or unpleasant smell. The product can be obtained in a high yield. In addition, the product, with inhibited oxidation and decomposition of lipids and production of amines, aldehydes, and hydrogen sulfide, is a flavorful with a satisfactory color and gloss. The product can be advantageously used as a material of *"sushi",* and prepared foods such as a vinegared food and *"oden"* (Japanese hotchpotch), by cutting it into a fillet with a suitable size.

### Example 23

### Pickled herring

Fillets of fresh herring, pre-seasoned with salt in a usual manner of soaking into a saline solution at an ambient temperature for one hour, were soaked into a seasoning solution, containing five parts by weight of the syrupy agent, prepared in Example 1, one part by weight of a seaweed broth and 100 parts by weight of vinegar, at an ambient temperature for five hours to obtain a pickled herring. The product is lowered in the unpleasant taste and/or smell and inhibited in the deterioration of the quality of meat even after the preservation for two months. In addition, the product, with inhibited production of amines, aldehydes and hydrogen sulfide and oxidation and decomposition of lipids, is flavorful with a satisfactory color and gloss. The product can be advantageously used as a material of *"sushi",* and prepared foods such as a vinegared food, if necessary, it was cut into pieces with a suitable size.

### Example 24

### Amberjack boiled with soy and sugar

One hundred parts by weight of fillets of fresh amber jack were placed in a pan, and admixed with 10 parts by weight of the powdery agent, prepared in Example 2 , 10 parts by weight of soy sauce, five parts by weight of *"mirin"* (sweet cooking rice wine), and 10 parts by weight of water and boiled in a usual manner to obtain amber jack boiled with soy and sugar. The product, with inhibited production of amines, aldehydes or hydrogen sulfide, and lowered unpleasant taste and/or smell inherent to amberjack, is flavorful with a satisfactory color and gloss.

### Example 25

### Premixed seasoning for pickles

Two thousands and five hundreds parts byweight of water, 70 parts by weight of salt, 30 parts by weight of sodium glutamate, 450 parts byweight of sorbitol, 150 parts byweight of the syrupy agent, prepared in Example 1, 10 parts by weight of citric acid, and five parts by weight of a powdery *"umami"* seasoning containing amino acids were mixed together to obtain a premixed seasoning for pickling *"hakusai"* (Chinese cabbage) . The product, with lowered unpleasant taste and/or smell ingerent to the *"umami"* seasoning, is delicious as a premixed seasoning for pickles. The product can be used as a seasoning for pickling pre-pickled *"halcusai".*

### Example 26

### Sauce for grilled meat

Twenty parts by weight of *"miso"* (soybean paste), 10 parts by weight of unrefined soy, nine parts by weight of strong soy sauce, 10 parts by weight of sucrose, 15 parts by weight of the syrupy agent, prepared in Example 1, five parts by weight of a purified salt, 0.8 part by weight of acetic acid, seven parts by weight of a seasoning, 10 parts by weight of tomato puree, one part by weight of onion paste, one part by weight of garlic paste, three parts by weight of ground ginger, three parts by weight of pork base, 0.5 part by weight of mixed spices, and 4.7 parts by weight of water were mixed together to obtain a sauce for grilled meat. The product, with lowered unpleasant taste and/or smell inherent to the ingredients therein, is delicious as a sauce for grilled meat. In addition, since the product enables to lower the unpleasant taste and/or smell inherent to meat and blood when used for grilled meat, it is capable of the grilled meat being delicious.

### Example 27

### Liquid seasoning for processing fish egg

Eighty five parts by weight of a conventional seasoning for processing fish egg, containing soy sauce and amino acids as main ingredients, was admixed with 15 parts by weight of the syrupy agent, prepared in Example 1. The product is a liquid seasoning which is lowered in the unpleasant taste and/or smell inherent to amino acids contained in the conventional seasoning. The product also enables to lower the unpleasant taste and/or smell inherent to fish egg, and produce a flavorful processed fish egg with a satisfactory color and gloss. The processed fish egg has few drips even after freeze-and-defrost.

### Example 28

### "Mirin" (Sweet cooking rice wine)

Five parts by weight of the syrupy agent, prepared in Example 1, was admixed with 95 parts byweight of a commercially available *"hon-mirin"* (sweet cooking rice wine). The product is lowered in the unpleasant taste and/or unpleasant smell inherent to conventional *"mirin".* The product also enables to lower the unpleasant taste and/or smell inherent to fish, shellfish, and fish egg when used therein. Therefore, the product makes cooked or processed products therewith change to be a flavorful with a satisfactory color and gloss.

### Example 29

### Beer

"NB BEER BASIC SET" , a commercially available kit for preparing beer, commercialized by mail-order club of Tokyu-Hands Inc., Tokyo, Japan, was used in this example. One hundred parts by weight of the attached solution for the fermentation in the kit was admixed with two parts by weight of the powdery agent, prepared in Example 2. And then, beer was obtained according to the manual attached with the kit. As a control, beer was obtained without using the agent. When the both beer were tasted, the product in the present invention was lowered the unpleasant taste and/or smell inherent to beer than the control beer, and was more delicious with a good aftertaste.

### Example 30

### Seasoned alcohol solution

Five hundreds parts by weight of 30% ethyl alcohol was admixed with 87 parts by weight of the powdery agent, prepared in Example 2, to obtain a seasoned alcohol solution. The product is lowered in irritable taste and/or smell inherent to alcohol. A low-alcohol sake can be produced by the steps of mixing equal amounts of the above seasoned alcohol solution and unrefined soy for sake brewing, diluting the mixture to adjust the alcohol content to 5 to 112%, filtrating the resulting solution, and sterilized it by heating. The resulting low alcohol sake has a good flavor and body with a lowered fermented smell though its alcohol content is lower than conventional sake.

### Example 31

### Powdered Soy sauce

Three parts by weight of soy sauce was admixed with one part by weight of the powdery agent, prepared in Example 2, and dissolved. The resultant was spray-dried in a usual manner to obtain a powdered soy sauce. The product is lowered in the unpleasant taste and/or smell such as a fermented smell even after the preservation for a long period. Since the product shows no hygroscopicity and retains taste and flavor of soy sauce, it can be advantageously used as a seasoning for instant noodle, instant soup, etc.

### Example 32

### Powdered Milk

One hundred parts by weight of fresh milk was admixed with one part by weight of the powdery agent, prepared in Example 2, and dissolved. The resultant was concentrated *in vacuo* at about 50° C to give a final concentration of 30% on a dry solid basis, and spray-dried in a usual manner to obtain powdered milk. The product is lowered in the unpleasant taste and/or smell newly generated due to spray-drying. Since the product shows no color deterioration and retains preferable taste and flavor of milk even after preserved for a long period, it can be advantageously used as a material for various foods and beverages, and as powdered milk for coffee.

### Example 33

### Powdered Royal Jelly

One part by weight of royal jelly (moisture content of 65%) was homogeneously mixed with three parts by weight of the powdery agent, prepared in Example 2, two parts by weight of "TREHA®", hydrous crystalline α,α-trehalose commercialized by Hayashibara Shoji Inc., Okayama, Japan, and 0.5 part by weight of ascorbic acid 2-glucoside commercialized by Hayashibara Biochemical Laboratories Inc. , Okayama, Japan, and dried *in vacuo* in a usual manner to obtained a powdered royal jelly. Since the product is lowered in the unpleasant taste and/or smell such as irritable smell inherent to royal jelly, and has a satisfactory water-solubility, it can be arbitrarily used, optionally after formed in a granule or tablet, as a material for health supplements, other foods and beverages, cosmetics, medicated cosmetics, and pharmaceuticals.

### Example 34

### Powdered Korean ginseng extract

Ten parts by weight of a five-folds strengths of Korean ginseng extract was mixed with two parts by weight of "TREHA®", a hydrous crystalline α,α-trehalose commercialized by Hayashibara Shoji Inc., Okayama, Japan, and three parts by weight of the powdery agent, prepared in Example 2, and dried *in vacuo* in a usual manner to obtain a powdered Korean ginseng extract. The product is lowered in the unpleasant taste such as bitterness and/or unpleasant smell such as browning smell inherent to Korean ginseng. The product has a satisfactory water-solubility, and can be arbitrarily used, optionally formed in a granule or tablet, as a material for health supplements, other foods and beverages, cosmetics, medicated cosmetics, and pharmaceuticals.

### Example 35

### Liquid propolis

Ninety-seven parts by weight of "NEW PROPHYLLA LIQIID", a liquid propolis commercialized by H+B Life Science, Co., Ltd. , Okayama, Japan, was admixed with three parts by weight of the syrupy agent, prepared in Example 1, and dissolved with stirring. The product, with lowered unpleasant taste and/or smell inherent to ethanol and propolis, is a liquid type of propolis easy to drink.

### Example 36

### Pickled eggplant

One hundred parts by weight of eggplant was mixed with 15 parts by weight of sodium chloride, 0.2 part by weight of baked alum, and 0.01 part by weight of ferrous sulfate, and pre-pickled. After washed with water, the pre-pickled eggplant was cut into an adequate size, desalted, and squeezed to dehydrate. Then, the resulting eggplant was further admixed with 10 parts by weight of Japanese horseradish, 10 parts by weight of sake lees, two parts by weight of the syrupy agent, prepared in Example 1, 0.03 part by weight of sodium glutamate, 0.01 part by weight of a powdery seasoning comprising amino acids, and 0.01 part by weight of sodium succinate, and pickled again to obtain a pickled eggplant in wasabi pickled in sake lees. The product, with lowered unpleasant taste and/or smell inherent to alum and iron ion, is a delicious pickle with a vivid color.

### Example 37

### Processed bean sprout

Soy bean sprout was soaked in a proper amount of solution prepared by dissolving 10 parts by weight of the agent, prepared in Example 1, and five parts by weight of ethanol in 85 parts by weight of water and cooling to 10°C, for 60 minutes. After removed form the solution, the bean sprout was tasted with a dressing. The product is more lowered in the unpleasant taste and/or smell such as a vegetable smell inherent to bean sprouts than those of bean sprout treated without the agent. The bean sprout can be preferably used as a material for salad and other processed foods.

### Example 38

### Vegetable juice

Sliced kale, broccoli, parsley, celery, and carrot were mixed and blanched at 95°C for 20 minutes. The resulting mixture was admixed with 3% of the syrupy agent, prepared in Example 1, and 0.2% of ascorbic acid, homogenized, and adjusted to pH 4.2 with citric acid to obtain a vegetable juice. The product, with lowered unpleasant taste and/or smell such as harsh taste, astringent taste or vegetable smell inherent to vegetables, is a vegetable juice easy to drink.

The vegetable juice was packed in a 100 ml-volume of a bottle and sealed under a sterilized condition. After preserved at an ambient temperature for six months, it was tasted. Since the product showed no color deterioration such as browning, and allowed not to feel the unpleasant taste and/or smell such as a vegetable smell inherent to vegetable and stuffy smell and light produced flavor due to the preservation, it was a vegetable juice easy to drink.

### Example 39

### Green tea beverage

Green tea, extracted from green tea-leafs in a usual manner, was admixed with 0.5% of the powdery agent, prepared in Example 2, and 0.2% of ascorbic acid to obtain a green tea beverage. Optionally, the product can be made into a powdered green tea in a usual manner; for example, concentrating to 20-folds and freeze-drying. The green tea beverage was packed into a 200 ml-volume of a bottle and sealed under a sterilized condition. After preserved at an ambient temperature for six months, the green tea beverage was tasted. Since the product was lowered in the unpleasant taste and/or smell such as stuffy smell, and showed no color deterioration such as browning, it was easy to drink.

### Example 40

### Coffee beverage

About 100 parts by weight of roasted coffee beans were ground and extracted with about 1,000 parts by weight of hot water, and then about 850 parts by weight of the extract was obtained. Four hundreds-fifty parts by weight of the extract was admixed with 40 parts by weight of sucrose, 20 parts by weight of α,α-trehalose, 20 parts by weight of the powdery agent, prepared in Example 2, 0.5 part by weight of sodium benzoate, and 550 parts by weight of water and adjusted to about pH 7 with sodium bicarbonate. The resulting solution was packed in a 200 ml-volume of steel can and sterilized at 120° C for 30 minutes to obtain a canned coffee beverage. Since the product is lowered in the unpleasant tastes such as harsh taste inherent to sodium benzoate and sodium bicarbonate, it is a coffee beverage easy to drink. The coffee, lowered in the unpleasant taste and/or unpleasant smell characteristic to canned coffee beverages, and has a high quality and a preferable flavor even when tasted after preserved at an ambient temperature and heated to 80°C.

### Example 41

### Tea beverage

Two hundreds parts by weight of a tea extract, prepared by extracting from black tea-leafs with hot water in a usual manner, was admixed with six parts by weight of the syrupy agent, prepared in Example 1, two parts by weight of α,α-trehalose, 0.3 part by weight of lemon juice, 0.1 part by weight of sodium benzoate, and 0.04 part by weight of ascorbic acid, and packed in a 200 ml-volume of steel can and sterilized at 120°C for 30 minutes to obtain a canned black tea beverage. Since the product is lowered in the harsh taste inherent to sodium benzoate, it is a black tea beverage easy to drink. The tea beverage has a high quality and a preferable flavor and taste with no unpleasant taste and/or smell characteristic to canned beverages even when tasted after preserved at an ambient temperature and cooled to 5° C.

### Example 42

### Beverage comprising amino acids

Four parts by weight of isoleucine, six parts by weight of leucine, eight parts by weight of lysine, eight parts by weight of phenylalanine, one part by weight of tyrosine, 12 parts byweight of tryptophan, eight parts byweight of valine, one part by weight of aspartic acid, one part by weight of serine, eight parts by weight of aminobutylic acid, eight parts by weight of alanine, two parts by weight of histidine, eight parts by weight of arginine, two parts by weight of threonine, and one part by weight of methionine were mixed together and dissolved in water to give a solution at the concentration of 1%. The resulting solution was further admixed with 4% of orange juice and 8% on a dry solid basis of the syrupy agent, prepared in Example 1. The product, with lowered bitter taste inherent to amino acids, can be used as a beverage with a good flavor and improved palatability.

### Example 43

### Beverage comprising minerals

Thirty parts by weight of sucrose, 4.64 parts by weight of xanthan gum, four parts by weight of locust bean gum, 3.4 parts by weight of tara gum, 1.7 parts by weight of psyllium seed gum, 1.2 parts by weight of ascorbic acid, 1.2 parts by weight of sodium chloride, 1.2 parts by weight of crystalline citric acid, 0.12 part by weight of sodium citrate, 0.12 part by weight of potassium chloride, 0.19 part by weight of calcium lactate, 0.01 part by weight of magnesium sulfate, 0.05 part by weight of sucralose, a proper amount of perfumery, and 50 parts by weight of the agent prepared in Example 2, were homogeneously mixed together. Eight parts by weight of the resulting mixture was dissolved in 92 parts by weight of water to obtain a mineral drink in a gel form. Since the product, with lowered bitter taste inherent to minerals and improved aftertastes inherent to sucrose and sucralose, is a flavorful beverage with the improved palatability. The product can be advantageously used as a mineral- and water-supplement on sports scene by packing it in an aluminum-laminate chewable tube. Since the product is a mineral- and water-supplement in a gel form, it is free from care to be taken into tracheas. Therefore, the product can be preferably used for patients with swallowing difficulty, old persons, and children.

### Example 44

### Supplement drink

Zero point one part by weight of "Enzogenol" a commercialized extract from bark of pine, containing polyphenols including proanthocyanidin, was admixed with 20 parts by weight of the syrupy agent, prepared in Example 1, to be improved in the water-solubility of polyphenols. The resulting solution containing polyphenols was dissolved in 100 parts by weight of water completely, and admixed with 0.5 part by weight of ascorbic acid, 0.01 part by weight of nicotinamide, and 0.01 part by weight of vitamin B6 to obtain a supplement drink. Since the product is lowered in the unpleasant taste and/or smell inherent to the extract of pine bark, it is a supplement drink easy to drink.

### Example 45

### Processed bittern

Two hundreds and two parts by weight of a bittern commercialized by Sanuki-Engyo Co., Ltd., Kagawa, Japan, was admixed with 144 parts by weight of the agent, prepared in Example 2, and kept at 70°C to completely dissolving. The resulting solution was concentrated *in vacuo* to obtain a processed bittern at the concentration of 63%. Since the product is lowered in the unpleasant tastes such as irritating taste and bitter taste inherent to bittern, it can be preferably used as an isotonic drink, health food, and a food material for old person and patients, of which minerals such as magnesium and/or calcium are enriched. Further, the product can be arbitrarily used as a material for cosmetics, medicated cosmetics, pharmaceuticals, feeds, and pet foods as well as a coagulant for *"tofu"* and a material for other foods and beverages.

### Example 46

### Polished rice

Onehundred parts by weight of unpolished rice (old rice) was homogeneously mixed by spraying with four parts by weight of the solution prepared by diluting the syrupy agent, prepared in Example 1, with water to the concentration of 25%, and kept overnight. The resulting unpolished rice was polished in a usual manner using a polishing machine to obtain polished rice. Since the product is lowered in the unpleasant taste and/or smell newly generated due to the oxidation and decomposition of lipid by incorporating about 0.2 % of α-maltosyl α,α-trehalose, it is polished rice having a high quality and satisfactory stability of the preservation. The product can be advantageously used as a material for flavorful cooked rice, rice ball, rice gruel, etc.

### Example 47

### Pre-washed rice

One hundred parts by weight of unpolished rice just after husked was admixed with one part by weight of the powdery agent, prepared in Example 7, and preserved in storage for six months. Successively, the unpolished rice was polished with a rice-polishing machine to prepare polished rice. The resulting polished rice was placed on a wire mesh belt conveyor and washed by spraying water in a high pressure for a very short time with mixing and transferring, and further sprayed with one part by weight of an aqueous solution, containing 20% of the powdery agent, prepared in Example 7, and 1% of calcium lactate. The resulting rice was dried, measured, and packed to obtain a pre-washed rice. The product contains about 0.3% of saccharide-derivatives of α,α-trehalose. Since the product is lowered in the unpleasant taste and/or smell such as stuffy smell, smell of bran and harsh taste of calcium, it can be used for preparing cooked rice, rice ball, rice gruel, *"sushi",* and gelatinized rice. Further, since the product has a good relish and enriched calcium, the product can be preferably used for keeping or promoting health.

### Example 48

### Cooked rice

Three hundreds parts by weight of polished rice, pre-washed and drained, was admixed with 370 parts by weight of water and 13.5 parts by weight of the powdery agent, prepared in Example 2, and boiled using a household rice cooker to obtain cooked rice. Since the product is lowered in the unpleasant smell inherent to rice bran, it keeps preferable flavor just after boiling for a relatively long period. Also, since the product is lowered in the unpleasant taste and/or unpleasant smell newly generated during the preservation under a frozen-, chilled-, or refrigerated-condition, it can be advantageously used as cooked rice, a material for its processed product, or intermediates thereof, which is distributed under those conditions.

### Example 49

### Instant noodles

Ninety eight point five parts by weight of strong wheat flour, 1.5 parts by weight of the syrupy agent, prepared in Example 1, and 30 parts by weight of 0.5% brine were mixed and kneaded in a usual manner to prepare noodles with a thickness of 0.9 mm. The resulting noodles were steamed for one minute in a steamer, they were fried in a salad oil at 145° C for one minute and 20 seconds to obtain instant noodles.

After preserved in a sealed container at an ambient temperature for one year, the product was reconstituted in boiled water for three minutes and then tasted. The product is lowered in the unpleasant taste and/or smell newly generated due to the oxidation of lipids. The reconstituted noodles showed a good taste.

### Example 50

### Dough for breads for frozen use

One hundred parts by weight of flour for French bread, five parts by weight of yeast, two parts by weight of sodium chloride, 0.3 part by weight of malt extract, 0.1 part by weight of yeast food, a small amount of emulsifier and 65 parts by weight of water were mixed together and kneaded. Then, the resulting dough was segmented to small groups and shaped in a roll and applied with one part by weight of a solution containing 40% on a dry solid basis of the agent, prepared in Example 2, to 49 parts by weight of the dough, and put on a tray and frozen at -60° C to obtain a shaped frozen dough for French bread. After preserved at -20°C for one month, the dough was thawed at 20° C for 90 minutes under the humidity of 75%, fermented at 28° C for 70 minutes under the humidity of 75%, and baked for 20 minutes to obtain a French bread. Since the shaped frozen dough is lowered in the fermented smell and unpleasant taste and/or smell of emulsifier, the baked bread has a preferable flavor.

### Example 51

### Rice flour bread

Four hundred parts by weight of *"KOMENO-KO* (for bread)", a rice flour comprising gluten commercialized by Saito Seifun Inc., Niigata, Japan, eight parts by weight of sodium chloride, 25 parts by weight of the syrupy agent, prepared in Example 1, 20 parts by weight of maltose, 12 parts by weight of sucrose, 12 parts by weight of a skim milk, 10 parts by weight of raw yeast, eight parts by weight of pullulan, and 315 parts by weight of water were mixed together with stirring using a vertical-type mixer. The resultant was admixed with 20 parts by weight of butter with the mixture and further kneaded to prepare dough. After fermented at 25° C for 50 minutes, the dough was divided into a suitable size and further fermented at 35° C under the humidity of 75% for 50 minutes. The resulting dough was baked for 40 minutes in an oven at the upper and lower temperatures of 180° C to obtain rice flour bread. The rice flour bread has a flavor of rice flour, glutinous texture, and a good taste. Since saccharide-derivatives of α,α-trehalose, which are effective ingredients of the agent of the present invention, enables to lower the unpleasant taste and/or smell of yeast formed during the fermentation and keep savory flavor formed during the baking, the product has a preferable flavor just after preparation for a long period. Since the product comprises saccharide-derivatives of α,α-trehalose, the product is rice flour bread having a preferable texture though it is prepared without using emulsifier.

### Example 52

### Candy

One hundred and eighty parts by weight of α,α-trehalose, 150 parts by weight of the syrupy agent, prepared in Example 1, and 85 parts by weight of water were mixed in a pan and boiled to 125° C. The resultant was admixed with 3.8 parts by weight of "AMINO-VITAL", an amino acids mixture commercialized by Ajinomoto Co., Inc., Tokyo, Japan, and boiled to 150°C to obtain a candy. Since saccharide-derivatives of α,α-trehalose, which are effective ingredients of the agent, and α,α-trehalose enables to lower the unpleasant taste and/or smell such as bitter taste and chemical smell inherent to amino acids, the candy has a good taste and can be advantageously used as a health supplement for the purpose of ingesting amino acids.

### Example 53

### Roasted almond

One hundred parts by weight of almond, roasted at 160° C for 15 minutes, was placed in the container containing 20 parts by weight of a solution adjusted to Brix 30 by diluting the syrupy agent, prepared in Example 1, in proper mount of water and heating to 140°C. After stirred gently, the resulting almond was drained and cooled to obtain a roasted almond. Since the product is coated with the agent of the present invention, it is lowered in the unpleasant taste and/or smell newly generated due to the oxidation. Therefore, the product has a preferable flavor of roasted almond just after preparation.

### Example 54

### Barley tea

The syrupy agent, prepared in Example 1, was dissolved in water to make into a solution with a concentration of 10%, on a dry solid basis. One hundred parts by weight of barley, roasted in a usual manner and kept at a high temperature, was evenly sprayed and mixed with two parts by weight of a solution prepared by diluting the syrupy agent, prepared in Example 1, in water to give a final concentration of 10% on a dry solid basis, and dried under circulation. The resulting roasted barley was filled in a pouch and packed to obtain a barley tea. The product, with lowered unpleasant taste and/or smell, is a flavorful barley tea without absorbing moisture.

### Example 55

### Strawberry jam

Five parts by weight of pectin and 140 parts by weight of the syrupy agent (not hydrogenated), prepared in Example 8, were homogeneously mixed together and admixed with 260 parts by weight of sucrose, 130 parts by weight of "SUNMALT®", a maltose commercialized by Hayashibara Shoji Inc., Okayama, Japan, and 180 parts by weight of water. The resulting mixture was completely dissolved by heating, admixed with 350 parts by weight of thawed frozen strawberry, and boiled to give a final concentration of 60%. After cooled and adjusted to pH 3.2 with citric acid, the resulting mixture was filled in a container, sealed and sterilized at 85° C for 30 minutes to obtain a bottled strawberry jam. The product, lowered in the unpleasant taste and/or smell, is capable of keeping a fresh color of the just after preparation thereof, even after preserved at an ambient temperature for six months.

### Example 56

### Dried and mixed fruits and vegetables

Forty parts by weight of parsley, 40 parts by weight of spinach, 40 parts by weight of lettuce, 40 parts by weight of cabbage, 40 parts by weight of celery and 100 parts by weight of carrot puree were mixed and admixed with maltose to give a final concentration of 10%. The resulting mixture was blanched at 80° C for one minutes, admixed with 200 parts by weight of apple, lemon juice extracted from one lemon, 36 parts by weight of the powdery agent, prepared in Example 2, and 50 parts by weight of palatinose, crushed with a mixer, and heated to give about Brix 60. The resulting product was cooled, spread on a plastic wrap and dried at 60° C overnight. The product, with lowered unpleasant taste and/or smell such as harsh taste and smell of vegetables, is a flavorful dried and mixed fruits and vegetables.

### Example 57

### Chocolate cookie

Chocolate cookie was prepared by the conventional method using 140 parts by weight of soft flour, 90 parts by weight of butter, 115 parts by weight of chocolate, 360 parts by weight of sucrose, 200 parts by weight of whole egg, 200 parts by weight of almond, and 50 parts by weight of the powdery agent (hydrogenated), prepared in Example 8. The product, with lowered unpleasant taste and/or smell, is capable of keeping flavor of the just after preparation thereof, even when tasted after the preservation at an ambient temperature for three months.

### Example 58

### Pie

A pie was prepared by the conventional method using 100 parts by weight of flour, two parts by weight of sucrose, two parts by weight of the powdery agent, prepared in Example 9, three parts by weight of fat, three parts by weight of whole egg, two parts by weight of skim milk, 0.3 part by weight of baking soda, 50 parts by weigh of fresh milk, and 100 parts by weight of water. The product, with lowered unpleasant taste and/or smell newly generated due to the oxidation of lipid and the presence of baking soda, is capable of keeping flavor of the just after preparation thereof, when tasted after the preservation in a refrigerator for one week.

### Example 59

### Soymilk

Soybeans harvested in Japan, soaked into 1.5-folds by weight of water at 5° C for 20 hours, were ground using a grinder to make into a homogenate. After adjusted to pH 5.5, three parts by weight of the homogenate was admixed with 0.018 part by weight of "FLAVORZYME" , a protease product commercialized by Novozyme Japan Co. Ltd, Tokyo, Japan, and reacted at 40° C for six hours. The reacted homogenate was adjusted to pH 9.0, kept at the temperature of 90° C or higher for three minutes, and squeezed using a screw-decanter. Ninety-five parts by weight of the resulting supernatant was adjusted to pH 6.3, and admixed with five parts by weight of the powdery agent, prepared in Example 2, to obtain a soymilk. The product, with lowered smell of vegetable and bitter taste inherent to soymilk and newly generated due to the protease treatment, is a flavorful soymilk. The product can be advantageously used as a material of processed product such as *"tofu"* (bean curd) as well as used as a soymilk. Further, since the product comprises a relatively large amount of γ-amino-butyric acid (GABA), it can be used as a material of health foods for lowering blood pressure.

### Example 60

### "Tofu" (bean curd)

Two hundreds fifty parts by weight of soymilk, one part by weight of glucono-delta-lactone, one part by weight of pectin, and 25 parts by weight of the powdery agent, prepared in Example 2, were homogeneously mixed together. The resulting solution was poured into a container, sealed, and heated at 90°C for 40 minutes to obtain a packed *"tofu".*

The product, with lowered in the unpleasant taste and/or smell inherent to soy beans, is a *"tofu"* without syneresis having a fine texture, stable shape, and flavor of the just after preparation thereof, even after the preservation in a frozen, chilled, or refrigerated condition.

The packed *"tofu"* was pulled out from the container and cut into cubes with a size of about 1 cm. After frozen at -80°C, the cubed *"tofu"* was freeze-dried with a freeze-drier for one day in a usual manner to obtain a dried *"tofu"*. The dried *"tofu" ,* lowered in the unpleasant taste and/or smell, has a flavor of the just after preparation thereof, even after preserved at an ambient temperature for three months. Since the dried *"tofu"* is reconstituted by soaking into hot water at 85° C for one minute, it is preferable as a filling for instant foods.

### Example 61

### Bacon

Twenty-two parts byweight of sodium chloride, 2.5 parts by weight of the syrupy agent, prepared in Example 1, two parts by weight of sucrose, two parts by weight of sodium lactate, two parts by weight of sodium polyphosphate, 0.5 part by weight of ascorbic acid, 0.2 part by weight of sodium nitrite and 68.8 parts by weight of water were homogeneously mixed to prepare a pickle-solution. Nine parts by weight of pork lib was injected with one part by weight of the above pickle-solution slowly so as to evenly penetrate in the meat. The resulting meat was smoked in a usual manner to obtain bacon. The resulting bacon was kept at an ambient temperature overnight, sliced, vacuum-sealed, and preserved at 10° C to obtain sliced bacon. The product, with inhibited production of amines, aldehydes, and hydrogen sulfide, and lowered unpleasant taste and/or smell, has a flavor of the just after preparation thereof, even after preserved for one week.

### Example 62

### Wiener sausage

Sixty-five parts by weight of pork shoulder, 20 parts by weight of beef, 15 parts by weight of pork fat, and 20 parts by weight of ice-cold water were mixed and ground into a suitable size. The resultant was admixed with 1.5 parts by weight of the powdery agent, prepared in Example 2, 0.2 part by weight of sodium chloride 0.2 part by weight of sodium glutamate, 0.3 part by weight of onion, 0.4 part by weight of white pepper, 0.04 part by weight of nutmeg, 0.02 part by weight of cinnamon, and 0.02 part by weight of cloves, and ground using a silent cutter. The resultant was stuffed into sheep rectum in a usual manner to obtain a wiener sausage. The product shows no syneresis and no denaturation even after freezing for six months and then thawing. The product, lowered in the unpleasant taste and/or smell of meat, blood or oil, has a good flavor and keeps elasticity of the just after preparation thereof when boiled and tasted.

### Example 63

### Retort-pouched curry

Five parts by weight of flour and 4.5 parts by weight of lard were mixed together and heated on an open fire, and then admixed with 1.5 parts by weight of curry powder and heated. The resultant was further admixed with 82 parts by weight of water, one part by weight of sodium chloride, 2.5 parts by weight of an instant bouillon, and 3.5 parts by weight of the powdery agent, prepared in Example 2, and boiled thoroughly for 10 minutes to prepare curry roux. One hundred fifty grams of the roux was gently admixed with 20 g of shrimp, 15 g of scallop, 5 g of squid fillet, 15 g of potato and 20 g of carrot, which are boiled thoroughly in an aqueous solution containing 5% of the powdery agent, prepared in Example 2, and 0.5% of calcium chloride, and packed in a retort pouch. The resultant was autoclaved at 121°C or 25 minutes.

After preserved at an ambient temperature for eight months, the retort pouched curry was broken seal and tasted. The both roux and fillings had relish such as taste, flavor, color, and texture of the just after preparation thereof. Also, it is lowered in the unpleasant taste and/or smell such as smell of retort pouch characteristic to retort pouched foods and inhibited in the disintegration and puckering of fillings and the deterioration of texture. Since the fillings such as shrimp, scallop, squid fillet, potato and carrot, which are boiled in a solution containing the agent, are lowered in the unpleasant taste and/or smell, they can be preferably used as fillings for not only curry but also other retort pouched foods and frozen foods.

### Example 64

### Soap

Ninety-six point five parts by weight of the neat soap, prepared by subjecting beef tallow and coconuts oil in the rate of 4:1 by weight to conventional saponification-salting out method, 1.5 parts by weight of the powdery agent, prepared in Example 3, 0.5 part by weight of ascorbic acid 2-glucoside, 0.5 part byweight of sucrose, 0.5 part byweight to "αG-RUTIN™" , a glycosyl rutin product commercialized by Toyo Sugar Refining Co., Ltd., Tokyo, Japan, one part by weight ofmaltitol, 0.0001 part by weight of *"Kanko-so"* No.201, and suitable amount of perfumery were homogeneously mixed. The resultant was poured into a mold, cooled and solidified to obtain soap. The product is lowered in the unpleasant smell of beef tallow. The product hardly makes person feel the unpleasant taste even if taken orally. The product has a good shape-keeping property. The product is further inhibited in the production of amines and aldehydes and the oxidation and decomposition of lipids contained in sweat, grime or sebum. In addition, it also has an anti-inflammatory activity. Therefore, the product can be advantageously used for preventing body odor and itch.

### Example 65

### Cosmetic cream

Two parts by weight of polyoxyethyleneglycol monostearate, five parts by weight of self-emulsified glycerin monostearate, five parts by weight of potassium DL-lactate, one part by weight of behenylalcohol, two parts by weight of eicosatetraenoic acid, one part by weight of liquid paraffin, 10 parts by weight of glycerin trioctanoate, and proper amount of preservative were homogeneously mixed and heated in a usual manner. The resulting mixture was admixed with two parts by weight of the syrupy agent, prepared in Example 6, five parts by weight of 1,3-butylene glycol, and 66 parts by weight of purified water and emulsified using a homogenizer. Further, the resulting emulsified mixture was admixed with a proper amount of perfumery and stirred to obtain a cream. The product, with lowered unpleasant smell of inherent to base ingredients such as emulsifier, is a stable high-grade whitening agent free from browning. Since saccharide-derivatives of α,α-trehalose, which are effective ingredients of the agent, inhibit the formation of amines and aldehydes and/or the oxidation and decomposition of lipids, and have an anti-inflammatory activity of suppressing the production of inflammatory cytokines such as tumor necrosis factor, the product can be advantageously used for lowering body odor, preventing cutaneous stimulation and itch, and for curing or preventing pigmentation such as fleck, freckle, sunburn, etc. The cream has a great availability and shows no stickiness when it is applied on the skin.

### Example 66

### Cosmetic cream

Two parts by weight of polyoxyethyleneglycol monostearate, five parts by weight of self-emulsified glycerin monostearate, five parts by weight of potassium DL-lactate, one part by weight of behenylalcohol, two parts by weight of eicosatetraenoic acid, one part by weight of liquid paraffin, 10 parts by weight of glycerin trioctanoate, two parts by weight of ascorbic acid 2-glucoside, and a suitable amount of preservative were mixed and dissolved by heating in a usual manner. The resultant was admixed with 1.6 parts by weight of the syrupy agent, prepared in Example 7, 0.1 part by weight of sodium hyaluronate, 0.1 parts by weight of dipotassium glycyrrhizinate, 0.1 part by weight of aloe barbadensis, 0.05 parts by weight of melissa extract, 0.05 part by weight of chamomile extract, 0.5 part by weight of glycosyl hesperidin, one part by weight of aqueous indigo extract, five parts by weight of 1,3-butyleneglycol, and 66 parts by weight of purified water and emulsified using a homogenizer. Further, the resulting emulsion was admixed with a proper amount of perfumery and stirred to obtain a cream. The product is lowered in the unpleasant smell inherent to base ingredient such as emulsifier. It hardly makes person feel the unpleasant taste even if taken orally. The product is a skin-whitening product whose quality is stabilized, of which the oxidation and decomposition of lipids in the product is inhibited. Since saccharide-derivatives of α,α-trehalose, which are effective ingredients of the agent inhibit the formation of amines and aldehydes and/or the oxidation and decomposition of lipids contained in sweat, grime, scurf or sebum, and have an anti-inflammatory activity of suppressing the formation of inflammatory cytokines, it can be advantageously used for preventing the generation of body odor, cutaneous stimulation and itch, and for curing or preventing pigmentation such as fleck, freckle and sunburn, and aging of skins. The product has a satisfactory moisture-keeping property and can be used withoutcare for hypersensitivity because of its low cutaneous-stimulating property. The cream has a great availability and shows no stickiness and good feeling when it is applied on the skin.

### Example 67

### Cosmetic emulsion

Two and half parts by weight of stearic acid, 1.5 parts by weight of cetanol, five parts by weight of vaseline, 10 parts by weight of liquid paraffin, two parts by weight of polyoxyethylene oleate, 0.5 part by weight of tocopherol acetate, 0.2 part by weight of dipotassium glycyrrhizinate, three parts by weight of polyethyleneglycol (1500), three parts by weight of ascorbic acid 2-glucoside, three parts by weight of an aqueous indigo extract, one part by weight of a glycosyl rutin, one part by weight of triethanolamine, two parts by weight of the syrupy agent, prepared in Example 6, 66 parts by weight of purified water, and 0.1 part by weight of propyl paraben were mixed, adjusted to pH 6.7 with potassium hydroxide, and admixed with a proper amount of perfumery in a usual manner to obtain a milky lotion. The product is lowered in the unpleasant smell inherent to base ingredients such as emulsifier. It hardly makes person feel the unpleasant taste even if taken orally. It is an emulsion for skin whitening with comfortable applying and satisfactory availability without sticky sensation. Saccharide-derivatives of α,α-trehalose as effective ingredients of the agent inhibit the production of amines and aldehydes contained in sweat, scurf or sebum and the oxidation and decomposition of lipids. In addition, they also have an anti-inflammatory activity, for example, suppressing the production of inflammatory cytokines. Therefore, the product can be used for preventing the body odor, cutaneous stimulation and itch, and for curing or preventing pigmentation such as fleck, freckle, sunburn, etc., and aging of skins.

### Example 68

### Hair conditioner

Two and half parts by weight of liquid paraffin, 0.5 part byweight of myristic acid, 1.5 parts byweight of cetanol, three parts by weight of glycerin mono-stearate, one part by weight of lauroyl glutamate polyoxyethyleneoctyldodecylether diester, 0.5 part by weight of polyoxyethyleneglyceryl pyroglutamate isostearate, and 0.1 part by weight of Kanko-so No. 301 (a photosensitizing dye) were mixed and heated. Separately, three parts by weight of the syrupy agent, prepared in Example 6, 2.5 parts by weight of lauroyl L-lysine, 0.5 part by weight of fatty acid L-arginine ethylpyrrolidonecaboxylic acid salt, 0.5 part by weight of stearyl trimethylammonium chloride, 0.1 part by weight of a glycosyl rutin, one part by weight of sodium pyrrolidonecaboxylic acid and 75 parts by weight of purified water were mixed and heated. The both of the above mixtures were mixed and emulsified in a usual manner to obtain a hair conditioner. The product is lowered in the unpleasant taste and/or smell inherent to base ingredients such as emulsifiers. It hardly makes person to feel unpleasant taste even if taken orally. The product can be used as a hair conditioner with a satisfactory availability. Saccharide-derivatives of α,α-trehalose as effective ingredients of the agent inhibits the production of amines and aldehydes contained in sweat, scurf or sebum and the oxidation and decomposition of lipids, and have an anti-inflammatory activity. Therefore, the product can be advantageously used for preventing the foreign smell of scarp sebum, itch and scurf, for increasing hair growth, and for curing and preventing the aging of scarp. Since the product comprises saccharide-derivatives of α,α-trehalose, it has a satisfactory moisture-keeping property though it does not comprise glycerin. The product can be used without care for hypersensitivity because of its low cutaneous-stimulating property.

### Example 69

### Shampoo

Thirty-five parts by weight of 2-alkyl-N-carboxymethyl-N-hydroxymethyl-imidazolium betaine (30% aqueous solution), 35 parts by weight of coconut oil-fatty acid triethanolamine glutamate solution (30% aqueous solution), 10 parts by weight of the syrupy agent, prepared in Example 6, 10 parts by weight of potassium cocoyl glycinate (30% aqueous solution), 2.3 parts by weight of coconut oil-fatty acid diethanolamide, three parts by weight of a glycosyl hesperidin, 0.1 parts by weight of *"Kanko-so"* No.201 (a photosensitizing dye), 0.1 parts by weight of *"Kanko-so"* No.301 (a photosensitizing dye), and 10 parts by weight of purified water were mixed and heated to 70° C with stirring to dissolve. The resultant was admixed with a proper amount of perfumery in a usual manner to obtain a shampoo. The product is lowered in the unpleasant smell inherent to base ingredients such as emulsifiers. In addition, it hardly makes person feel unpleasant taste even if taken orally. It is a shampoo with a satisfactory foaming property and availability. The product is inhibited in the production of volatile aldehydes and the oxidation and decomposition of lipids, and has an anti-inflammatory activity. Therefore, it can be advantageously used for preventing the foreign smell of scalp and sebum, itch and scurf, for increasing hair growth, and for curing and preventing the aging of scarp. Since the product comprises saccharide-derivatives of α,α-trehalose as effective ingredients, it has a satisfactory moisture-keeping property though it does not comprise glycerin. The product can be used without care for hypersensitivity because of its low cutaneous-stimulating property.

### Example 70

### Hair treatment

Five parts by weight of stearyl alcohol, five parts by weight of glycerin mono-stearate, 3.5 parts by weight of liquid paraffin, two parts by weight of lauroylglutamate polyoxyethyleneoctyldodecylether diester, and one part by weight of polyoxyethylene glyceril pyroglutamate isostearate were mixed with heating. Separately, five parts by weight of the syrupy agent, prepared in Example 6, three parts by weight of 1,3-butyleneglycol, one part by weight of stearyl trimethylammonium chloride, one part by weight of sodium pyrrolidonecarboxylic acid, 0.1 part by weight of a glycosyl rutin, and 65 parts by weight of deionized water were mixed with heating. The both of above mixtures were mixed together and emulsified in a usual manner to obtain a hair treatment. The product is lowered in the unpleasant smell inherent to base ingredients such as emulsifiers. In addition, the product hardly makes person feel unpleasant taste even if taken orally. The product is a hair treatment with a satisfactory availability. The product is inhibited in the production of volatile aldehydes and the oxidation and decomposition of lipids, and has an anti-inflammatory activity. Therefore, the product can be advantageously used for preventing the foreign smell of scarp and sebum, itch and scurf, for increasing hair growth, and for curing and preventing the aging of scarp. Since the product comprises saccharide-derivatives of α,α-trehalose as effective ingredients, it has a satisfactory moisture-keeping property though it does not comprise glycerin. The product can be used without care for hypersensitivity because of its low cutaneous-stimulating property.

### Example 71

### Body soap

Fifteen parts by weight of potassium laurate, 5.0 parts by weight of potassium myristate, 4.0 parts by weight of the syrupy agent, prepared in Example 6, 2.0 parts by weight of propylene glycol, 0.5 part by weight of polyethylene powder, 0.5 part by weight of hydroxylpropylchitosan solution, 0.25 part by weight of glycine, 0.25 part by weight of glutamine, 0.1 part by weight of *"Kanko-so"* No.201 (a photosensitizing dye), and a proper amount of phenol, pH conditioner and lavender water were admixed with purified water to give a final weight of 100 parts by weight, and emulsified in a usual manner to obtain body soap. The product is lowered in the unpleasant smell inherent to base ingredients such as emulsifiers. The product hardly makes person feel unpleasant taste even if taken orally. The product is body soap with a satisfactory foaming property and availability. The product is inhibited in the production of amines and aldehydes and the oxidation and decomposition of lipids, and has an anti-inflammatory activity, for example, inhibiting the production of inflammatory cytokines. Therefore, the product can be advantageously used for preventing the foreign smell of scarp and sebum, itch and scurf, for increasing hair growth, and for curing and preventing the aging of scarp. Since the product comprises saccharide-derivatives of α,α-trehalose as effective ingredients, it has a satisfactory moisture-keeping property though it does not comprise glycerin. The product can be used without care for hypersensitivity because of its low cutaneous-stimulating property.

### Example 72

### Tooth paste

Thirty parts by weight of calcium mono-hydrogen phosphate, 10 parts by weight of hydroxyapatite, five parts by weight of calcium bicarbonate, 30 parts by weight of the syrupy agent, prepared in Example 1, 1.5 parts by weight of sodium lauryl sulfate, one part byweight of "αG-HESPERIDIN™", a glycosyl hesperidin commercialized by Hayashibara Biochemical Laboratories Inc., Okayama, Japan, 0.7 part by weight of sodium mono-fluorophospahte, 0.5 part by weight of polyoxyethylene sorbitan laurate, 0.05 part by weight of preservative, 0.02 part by weight of saccharin sodium, and 22 parts by weight of water were mixed to obtain a tooth paste. The product, with lowered unpleasant tastes such as bitterness of sodium lauryl sulfate and aftertaste inherent to saccharin, can be preferably used as a tooth paste having a comfortable mouth-feel and availability, and satisfactory gloss and washing property. In addition, the product is capable of inhibiting inflammation in one's mouth, improving the circulation of the blood, and reducing breath odor. Saccharide-derivatives of α,α-trehalose such as α-maltosyl α,α-trehalose, which are effective ingredients of the agent of the present invention, are effective on inhibiting the production of insoluble glucans and dental caries. Therefore, the product is preferably used as a tooth paste.

### Example 73

### Mouth-wash

Fifteen parts by weight of ethanol, 10 parts by weight of the syrupy agent, prepared in Example 1, two parts by weight of polyoxyethylene hydrogenated ricinus, 0.02 part by weight of saccharin sodium, 0.05 part by weight of sodium benzoate, 0.1 part by weight of sodium dihydrogen phosphate, a proper amount of coloring and perfumery, and 72.2 parts by weight of water were mixed to obtain a mouth-wash. The product, with lowered unpleasant taste such as aftertaste inherent to saccharin, has a comfortable mouth-feel and availability. The product is capable of inhibiting inflammation in one's mouth, improving the circulation of the blood, and reducing breath odor. Saccharide-derivatives of α,α-trehalose such as α-maltosyl α,α-trehalose, which are effective ingredients of the agent of the present invention, are effective on inhibiting the production of insoluble glucans and dental caries. Therefore, the product is preferably used as a mouth-wash.

### Example 74

### Ointment for curing wound

Four hundred-fifty parts by weight of macrogol (400), three parts by weight of carboxyvinyl polymer, one part by weight of pullulan, 400 parts by weight of isopropanol, and one part by weight of chlorhexidine gluconate solution were mixed with stirring *in vacuo* and admixed with 70 parts by weight of the powdery agent, prepared in Example 3, three parts by weight of sodium hydroxide, and 77 parts by weight of purified water to obtain an ointment for curing wound with a suitable extending property and adhesive property. The product is lowered in the unpleasant smell inherent to these ingredients. In addition, the product hardly makes person feel unpleasant taste even if taken orally. It can be used without uncomfortable feeling. Since the product also has anti-inflammatory activity, it can be used for curing wounds such as incisure, abration, burn, foot ringworm and frost damage by applying it to affected area intact or by applying on gauze and using it.

### Example 75

### Multi-vitamin tablet

Five parts by weight of retinol palmitate, five parts by weight of ergocalciferol, 10 parts by weight of fursultiamine hydrochloride, five parts by weight of riboflavin, 10 parts by weight of pyridoxine hydrochloride, 60 parts by weight of ascorbic acid, 10 parts by weight of tocopherol acetate, 30 parts by weight of nicotinamide, 0.01 part by weight of cyanocobalamin, and 40 parts by weight of calcium pantothenate, were mixed with stirring. One part by weight of the resulting mixture was admixed with 24 parts by weight of the powdery agent (hydrogenated), prepared in Example 3, stirred and tableted using a tablet machine to obtain a multi-vitamin tablet. The product is lowered in the unpleasant taste and/or smell such as chemical smell inherent to vitamins even after preserved for a long period. The product, inhibited in the oxidation and decomposition of vitamins, has no moisture-adsorption and is taken easily.

### Example 76

### Eye-drops

Five parts by weight of the powdery agent (pyrogen free), prepared in Example 5, 0.4 part by weight of sodium chloride, 0.15 part by weight of potassium chloride, 0.2 part by weight of sodium dihydrogen phosphate, 0.15 part by weight of borax, and 0.1 part by weight of dipotassium glycirrhizinate, were admixed with sterilized purified water in an amount to give a final weight of 100 parts by weight, and stirred to obtain sterilized and pyrogen free eye-drops. The product hardly makes person feel the unpleasant taste of glycirrhizinoic acid even if taken lacrimonasally. The product protects mucosa of eye and cells on the surface of eyeball from disorder by drying and activates these cells. Therefore, the product can be advantageously used for a preventing agent or curing agent for patients with dry-eye and Sjögren's syndrome.

### Example 77

### Film

Twenty-two parts by weight of "PULLULAN PI-20", a commercially available pullulan product commercialized by Hayashibara Shoji Inc., Okayama, Japan, 22 parts by weight of hydroxymethylene cellulose, one part by weight of a surfactant (sucrose monolaurate), five parts by weight of the syrupy agent, prepared in Example 6, one part by weight of glycerol, and one part by weight of sucralose were admixed with 200 parts by weight of deionized water to make into a solution for producing a film. The solution, deaerated in vacuo, was extended on a synthetic plastic film in a manner of continuously flowing, and dried by passing through hot air at 70° C to obtain a film with a thickness of 30 µm. The product, lowered in the unpleasant taste and/or smell of the surfactant, has a satisfactory transparency, gloss and water-solubility. Since the product has a satisfactory stability against the change of humidity, it can be used as an edible and water-soluble film for the purpose of secondary processing in the manner of pinching, stacking and filling various substances in the field of foods and beverages, cosmetics, pharmaceuticals, chemical industrial products, etc., optionally after processed in a bag form.

### Example 78

### Agent for preserving freshness

Ninety-seven parts by weight of "*TAKE*-LIGNAN™ 505", a bamboo extract commercialized by Foodtech Co., Ltd, Osaka, Japan, three parts by weight of the syrupy agent, prepared in Example 1, were mixed and stirred to obtain an agent for preserving freshness for fish and selfish. The product, lowered in the unpleasant taste and/or smell of the bamboo, is an agent for preserving freshness with a satisfactory antibiotic property. The product is capable of eliminating fishy smell inherent to sea foods and its processed products in a manner of: for example, diluting the product to about 100-folds with cool water or cool aqueous saline with a concentration of 2-3%, and soaking intact fish and selfish or their processed products such as fillet into the resulting solution for 1 to 5 minutes. In addition, since the product is also capable of inhibiting the oxidation of fish and selfish and the growth of microorganisms such as bacteria, it keeps the freshness of fish and selfish. The product can be used for inhibiting the formation of unpleasant taste and/or unpleasant smell and for preserving the freshness by spraying or applying on the surface of fish and selfish, their processed product, or other compositions such as foods using a spray. Further, the product is capable of lowering foreign smells such as body odor, smell of animals, ammonia, and cigarette, and smells due to the proliferation of microorganisms such as bacteria in a manner of; for example, diluting the product to suitable concentration (50-folds or more) and spraying the diluted solution on the bodies of humans and animals, cooking equipments, rooms, furnitures, industrial wastes, faces of animals. In addition, the product can be used for sterilizing microorganisms including bacteria.

### INDUSTRIAL APPLICABILITY

As described above, the present invention is to lower unpleasant taste and/or smell of compositions by incorporating the agent of the present invention, comprising saccharide derivatives of α,α-trehalose as an effective ingredient, in the objective compositions. Since the saccharide derivatives of α,α-trehalose are safe and stable, the agent of the present invention, comprising them, is useful for various fields including foods, beverages, quasi-drugs, pharmaceuticals, commodities, feeds, pat foods, groceries, chemical industrial products, etc. The present invention with such as outstanding function and effect is a significant invention that will greatly contribute to this art.

## Claims

1. A method of lowering unpleasant taste and/or smell, which comprises a step of incorporating a saccharide derivative of α,α-trehalose in a composition.

2. The method of claim 1, wherein said saccharide derivative of α,α-trehalose has a structure wherein mono-, di-, tri-or tetra-glucose binds to at least one glucose residue of α,α-trehalose molecule.

3. The method of claim 1 or 2, wherein said saccharide derivative of α,α-trehalose has a trehalose structure at its end.

4. The method of claim 1, 2 or 3, wherein said saccharide derivative of α,α-trehalose is in an amorphous form.

5. The method of claim 1, 2, 3 or 4, which further comprises a step of incorporating other saccharide together with said saccharide derivatives of α,α-trehalose.

6. The method of claim 5, wherein said other saccharide is one or more members selected from the group consisting of reducing saccharides, non-reducing saccharides, sugar alcohols, and water-soluble polysaccharides.

7. The method of claim 6, wherein said non-reducing saccharide is α,α-trehalose.

8. The method of any one of claims 1 to 7, wherein said saccharide derivative of α,α-trehalose is incorporated in an amount of at least 0.6% by weight, on a dry solid basis, to the total amount of said composition.

9. A composition, which is lowered in unpleasant taste and/or smell, obtainable by the method of any one of claims 1 to 8.

10. The composition of claim 9, which is an article for oral use, food, beverage, cosmetic, quasi-drug, pharmaceutical, commodity, feeding stuff, pet food, grocery or chemical industrial products.

11. The composition of claim 10, which is a seasoning, extract, cream, jam, paste, Japanese confection, Western confection, bread, processed fish or meat product, fishery product, processed agricultural product, noodle, prepared food, boiled rice, fermented food, frozen food, retort pouched food, refrigerated food, dried food, freeze-dried food, alcoholic beverage, soft drink, ampuled liquid medicine, amino acid preparation, mineral preparation or vitamin preparation.

12. The composition of any one of claims 9 to 11, which is a table sugar, chewing gum, seasoned dried bonito flake extract, processed raw scallop, filet of sea bass, processed sea urchin, dried blowfish, boiled-dried fish, processed shelled clam, boiled octopus, herring pickled in vinegar, yellowtail boiled with soy and sugar, beer, powdered soy sauce, powdered milk, powdered royal jelly, powdered Korean ginseng extract, pickled eggplant, processed bean sprout, vegetable juice, green tea beverage, coffee beverage, black tea beverage, beverage containing amino acid, beverage containing mineral, processed bittern, polished rice, pre-washed rice, boiled rice, instant noodle, frozen dough, rice bread, candy, roast almond, barley tea, strawberry jam, dried and mixed fruit and vegetable, chocolate cookie, pie, soy milk, bean curd, bacon, wiener sausage, retort pouched curry, soap, cosmetic cream, cosmetic milky lotion, hair conditioner, shampoo, hair treatment, body soap, tooth paste, mouse wash, ointment for treatment of external injury, multi-vitamins preparation, eye drop or film.

13. An agent for lowering unpleasant taste and/or smell, which comprises a saccharide derivative of α,α-trehalose as an effective ingredient.

14. The agent of claim 13, wherein said α,α-trehalose saccharide has a structure wherein mono-, di-, tri- or tetra-glucose binds to at least one glucose residue of α,α-trehalose molecule.

15. The agent of claim 13 or 14, wherein said saccharide derivative of α,α-trehalose has a trehalose structure at its end.

16. The agent of claim 13, 14 or 15, wherein said saccharide derivative of α,α-trehalose is in an amorphous form.

17. The agent of any one of claims 13 to 16, which further comprises other saccharide together with saccharide derivatives of α,α-trehalose.

18. The agent of claim 17, wherein said other saccharide is one or more members selected from the group consisting of reducing saccharides, non-reducing saccharides, sugar alcohols and water-soluble polysaccharides.

19. The agent of claim 18, wherein said non-reducing saccharide is α,α-trehalose.

20. The agent of any one of claims 13 to 19, which comprises said saccharide derivative of α,α-trehalose in an amount of 10% by weight on a dry solid basis.

21. The agent of any one of claims 13 to 20, wherein said unpleasant taste and/or smell is inherent to amines or aldehydes.
